# EUROPÄISCHE PATENTSCHRIFT

(11) **EP 3 108 528 B1**
(45) Veröffentlichungstag und Bekanntmachung des Hinweises auf die Patenterteilung: **03.04.2019**
(21) Anmeldenummer: 15705325.7
(22) Anmeldetag: 20.02.2015
(51) Int. Cl.: H01M 4/86, H01M 4/88, H01M 4/90, H01M 12/08

(54) **GASDIFFUSIONSELEKTRODE, VERFAHREN ZUM HERSTELLEN EINER GASDIFFUSIONSELEKTRODE UND BATTERIE**
GAS DIFFUSION ELECTRODE, METHOD FOR PRODUCING A GAS DIFFUSION ELECTRODE AND BATTERY
ÉLECTRODE À DIFFUSION GAZEUSE, PROCÉDÉ DE PRODUCTION D'UNE ÉLECTRODE À DIFFUSION GAZEUSE ET BATTERIE

(30) Priorität: 21.02.2014 DE 102014102304
(43) Veröffentlichungstag der Anmeldung: 28.12.2016
(73) Patentinhaber: Deutsches Zentrum für Luft- und Raumfahrt e.V., 51147 Köln (DE)
(72) Erfinder: WITTMAIER, Dennis, 71665 Vaihingen (DE); WAGNER, Norbert, 86368 Gersthofen (DE); ABDELHALIM, Hatem M., 53115 Bonn (DE); BALTRUSCHAT, Helmut, 53117 Bonn (DE)
(74) Vertreter: Hoeger, Stellrecht & Partner Patentanwälte mbB
(86) Internationale Anmeldenummer: PCT/EP2015/053586
(87) Internationale Veröffentlichungsnummer: WO 2015/124713

(56) Entgegenhaltungen:
- WO-A1-01/70392
- CN-A- 103 326 039
- US-A1- 2013 089 796

## Beschreibung

Die vorliegende Erfindung betrifft eine Gasdiffusionselektrode, insbesondere zur Verwendung als Kathode für eine Batterie, insbesondere für eine Metall-Luft-Batterie, welche ein Gemisch aus Silber und einem Metalloxid enthält.

Ferner betrifft die vorliegende Erfindung ein Verfahren zum Herstellen einer Gasdiffusionselektrode, insbesondere zur Verwendung als Kathode für eine Batterie, insbesondere für eine Metall-Luft-Batterie.

Außerdem betrifft die vorliegende Erfindung eine Batterie, insbesondere eine Metall-Luft-Batterie, umfassend eine negative Elektrode mit einem Anodenkontakt, einer positive Elektrode mit einem Kathodenkontakt und einen Elektrolyt.

Gasdiffusionselektroden, Verfahren zur Herstellung von Gasdiffusionselektroden und Batterien sind in vielfältiger Weise bekannt. Vielfach eingesetzte Lithium-Ionen-Batterien haben aufgrund der aktiven Materialien, die zur Ausbildung ihrer Anoden und Kathoden verwendet werden, eine begrenzte Kapazität, welche für zukünftige Anwendungen, insbesondere bei Elektrofahrzeugen, nicht ausreichend ist. Metall-Luft-Batterien haben zumindest theoretisch eine gegenüber Li-Ionen-Batterien eine deutlich höhere Kapazität.

Für Metall-Luft-Batterien ist es zur Ausbildung von Kathoden bekannt, teure Edelmetallkatalysatoren wie beispielsweise Platin oder dergleichen zu verwenden. Außerdem ist es bekannt, kohlenstoffgeträgerte Katalysatoren zu verwenden. Allerdings haben kohlenstoffgeträgerte Katalysatoren den Nachteil, dass sie in alkalischen Elektrolyten während der Sauerstoffentwicklung nur bedingt stabil sind. Zudem werden für den Einsatz derartiger Katalysatoren als Gasdiffusionselektroden große Mengen benötigt, so dass bei Verwendung von Edelmetallen hohe Kosten zur Ausbildung der Elektroden entstehen.

Aus der CN 103 326 039 A ist ein Katalysator für eine Luftelektrode bekannt. In der WO 01/70392 A1 sind elektrokatalytische Pulver offenbart. Eine Lithium-Luft-Batterie ist in der US 2013/0089796 A1 beschrieben.

Es ist daher eine Aufgabe der vorliegenden Erfindung, eine Gasdiffusionselektrode, ein Verfahren zur Ausbildung einer Gasdiffusionselektrode und eine Batterie in der jeweils eingangs beschriebenen Art so zu verbessern, dass kostengünstige und stabile Gasdiffusionselektroden und Batterien ausgebildet werden können.

Diese Aufgabe wird bei einer Gasdiffusionselektrode der eingangs beschriebenen Art erfindungsgemäß dadurch gelöst, dass das Silber und das Metalloxid in Pulverform zusammengemischt sind und dass das Metalloxid Cobaltoxid in der Form Co₃O₄ oder Iridiumoxid in der Form IrO₂ ist oder enthält.

Silber ist im Gegensatz zu Platin ein relativ günstiges und gut verfügbares Edelmetall. Es verfügt zudem über für die Leistung der Gasdiffusionselektrode wichtige Eigenschaften wie insbesondere eine ausgezeichnete elektrische Leitfähigkeit, eine hervorragende Stabilität in einem alkalischen Medium sowie eine ausgezeichnete katalytische Aktivität bei der Sauerstoffreduktion im alkalischen Medium. Im Vergleich zu Elektroden aus Silber mit IrO₂ oder Silber mit RuO₂, welche in der Sauerstoffreduktion eine geringere katalytische Aktivität zeigen, dominiert Silber bei Gasdiffusionselektroden die Aktivität bei der Sauerstoffreduktion. Co₃O₄ besitzt eine hervorragende Aktivität bei der Sauerstoffentwicklung. Zwar ist die Leitfähigkeit von Co₃O₄ sehr gering, doch wird dieser Nachteil durch die Kombination mit Silber ohne weiteres ausgeglichen. Ferner ist Co₃O₄ auch im alkalischen Medium stabil. IrO₂ und RuO₂ zeigen teilweise geringfügig bessere Aktivitäten in der Sauerstoffentwicklung als Co₃O₄. Allerdings sind sie wesentlich teurer als Cobaltoxid und besitzen auch keine gute elektrische Leitfähigkeit. Durch die bislang nicht bekannten Kombinationen von Silber und Cobaltoxid, Silber und Rutheniumoxid sowie Silber und Iridiumoxid zur Ausbildung von Gasdiffusionselektroden kann die Leistung derselben im Vergleich zu bekannten Batterien deutlich gesteigert werden. Zudem wird eine höhere Langzeitstabilität erreicht als dies bei Kohlenstoff enthaltenden Systemen der Fall ist. Durch die Beimischung von Co₃O₄ zu Silber kann bei bestimmten Mischungsverhältnissen sogar die Leistung der Gasdiffusionselektrode im Vergleich zu reinen Silberelektroden in der Reduktion erhöht werden, obwohl für die Sauerstoffreduktion das Silber leistungsbestimmend ist. Ein solches Verhalten ist insbesondere für Gasdiffusionselektroden, die IrO₂ enthalten, nicht festzustellen. Die Mischung aus Silber und Cobaltoxid ist somit hervorragend geeignet, einen kostengünstigen, bifunktionellen Katalysator zu bilden für die Sauerstoffreduktion einerseits und die Sauerstoffentwicklung andererseits in einem alkalischen Elektrolyten, insbesondere als Gasdiffusionselektrode in Form einer als Kathode für Metall-Luft-Batterien, beispielsweise für Lithium-Luft-Batterien. Außerdem kann durch die Beimischung von Co₃O₄, RuO₂ oder IrO₂ zu Silber auf die Verwendung von Kohlenstoff als leitfähiger Zusatz verzichtet werden, wodurch die Stabilität der Gasdiffusionselektrode im Vergleich zu Kohlenstoff enthaltenden Elektroden signifikant verbessert wird. Insbesondere ist es auch denkbar, als Metalloxid eine Mischung aus Co₃O₄, RuO₂ oder IrO₂ einzusetzen.

Günstig ist es, wenn die Gasdiffusionselektrode aus einem Gemisch aus Silber (Ag) und dem Metalloxid besteht. Zur Ausbildung der Gasdiffusionselektrode werden somit keine weiteren Komponenten benötigt. Insbesondere kann auf die Leitfähigkeit steigernde Zusätze wie beispielsweise Kohlenstoff verzichtet werden. Als Metalloxid kann insbesondere Co₃O₄, RuO₂ und/oder IrO₂ eingesetzt werden.

Vorteilhaft ist es, das Gemisch aus Silber (Ag) mit einem Gewichtsanteil in einem Bereich von etwa 85 % bis etwa 50 % und Metalloxid mit einem Gewichtsanteil in einem Bereich von etwa 5 % bis etwa 40 % enthält. Vorzugsweise enthält das Gemisch Silber (Ag) mit einem Gewichtsanteil in einem Bereich von etwa 80 % bis etwa 60 % und Metalloxid mit einem Gewichtsanteil in einem Bereich von etwa 10 % bis etwa 30 %. Günstigerweise enthält das Gemisch Silber (Ag) mit einem Gewichtsanteil von etwa 70 % und Metalloxid mit einem Gewichtsanteil von etwa 20 %. Gasdiffusionselektroden mit Silber und Metalloxid, insbesondere Co₃O₄, in den angegebenen Mischungsverhältnissen weisen hervorragende Katalysatoreigenschaften auf, und zwar sowohl bei der Sauerstoffreduktion als auch bei der Sauerstoffentwicklung.

Zur Verbesserung der mechanischen Stabilität der Gasdiffusionselektrode ist es vorteilhaft, wenn sie ein Bindemittel enthält. Mit einem geeigneten Bindemittel kann die Mischung aus Silber und Cobaltoxid insbesondere mechanisch stabil verbunden werden. Ferner kann beispielsweise ein hydrophobes Bindemittel verhindern, dass sich die Gasdiffusionselektrode mit Wasser vollsaugt.

Günstig ist es, wenn ein Gewichtsanteil des Bindemittels in einem Bereich von etwa 5 % bis etwa 15 % liegt. Vorzugsweise beträgt der Gewichtsanteil des Bindemittels etwa 10 %. Bindemittelanteile in den angegebenen Bereichen ermöglichen es, mechanisch stabile Gasdiffusionselektroden herzustellen, die insbesondere noch die erforderliche Porosität aufweisen sowie eine hinreichend große Oberfläche der aktiven Materialien Silber und Cobaltoxid, Rutheniumoxid beziehungsweise Iridiumoxid um bifunktionell als Katalysator zu wirken.

Vorzugsweise enthält das Bindemittel Polytetrafluorethylen (PTFE), Polypropylen (PP), Polyvinylidenfluorid (PVDF) und/oder Polyethylen (PE). Insbesondere die genannten Polymere, deren Aufzählung nicht abschließend ist, ermöglichen die Herstellung eines stabilen Verbundes aus Silber und Metalloxid, insbesondere Cobaltoxid, Rutheniumoxid oder Iridiumoxid. Beispielsweise kann das Bindemittel zur Aktivierung aufgeschmolzen werden, beispielsweise durch Erhöhung der Temperatur über die Schmelztemperatur des Bindemittels oder einer Bindemittelkomponente, die im Bindemittel enthalten ist. Ferner haben die angegebenen Bindemittel den Vorteil, dass sie hydrophob sind.

Zur Ausbildung einer möglichst großen aktiven Oberfläche der Gasdiffusionselektrode ist es günstig, wenn eine Metalloxid-Partikelgröße nicht größer als etwa 100 nm ist. Vorzugsweise ist die Metalloxid-Partikelgröße nicht größer als etwa 50 nm.

Um insbesondere für den Einsatz in einer Metall-Luft-Batterie die zum Betreiben einer solchen erforderliche Sauerstoffdiffusion zu ermöglichen, ist es vorteilhaft, wenn eine Porosität der Gasdiffusionselektrode in einem Bereich von etwa 40 % bis etwa 80 % liegt. Insbesondere ist es günstig, wenn die Porosität in einem Bereich von etwa 50 % bis etwa 65 % liegt.

Um eine möglichst große aktive Oberfläche des in der Gasdiffusionselektrode enthaltenen Silbers zu erreichen, ist es günstig, wenn eine Silber-Korngröße des in der Gasdiffusionselektrode enthaltenen Silbers in einem Bereich von etwa 17 µm bis etwa 31 µm liegt. Insbesondere ist es vorteilhaft, wenn die Silber-Korngröße in einem Bereich von etwa 21 µm bis etwa 27 µm liegt. Silber-Korngrößen in den angegebenen Bereichen ermöglichen es, einerseits eine hohe Porosität der Gasdiffusionselektrode zu realisieren und andererseits eine für die Katalysatorwirkung große Oberfläche zu erreichen.

Eine besonders hohe katalytische Aktivität bei der Sauerstoffreduktion im alkalischen Medium kann erreicht werden, wenn ein Anteil in einem Bereich von etwa 75 % bis etwa 95 % des in der Gasdiffusionselektrode enthaltenen Silbers eine Silber-Korngröße in einem Bereich von etwa 17 µm bis etwa 31 µm aufweist. Vorteilhafterweise beträgt der Anteil der Korngröße im angegebenen Bereich etwa 84 %.

Ferner ist es vorteilhaft, wenn ein Anteil in einem Bereich von etwa 40 % bis etwa 60 % des in der Gasdiffusionselektrode enthaltenen Silbers eine Silber-Korngröße in einem Bereich von etwa 9 µm bis etwa 18 µm aufweist. Günstig ist es, wenn der Anteil der Korngröße in diesem Bereich etwa 50 % beträgt. Auch dies wirkt sich insbesondere positiv auf die katalytische Aktivität bei der Sauerstoffreduktion im alkalischen Medium aus.

Ferner ist es günstig, wenn ein Anteil in einem Bereich von etwa 10 % bis etwa 22 % des in der Gasdiffusionselektrode enthaltenen Silbers eine Silber-Korngröße in einem Bereich von etwa 4 µm bis etwa 10 µm aufweist. Vorzugsweise liegt der Anteil der angegebenen Korngröße bei etwa 16 %. So kann insbesondere eine gute katalytische Aktivität bei der Sauerstoffreduktion im alkalischen Medium erreicht werden.

Um eine für die Diffusion von Sauerstoff optimierte Porosität der Gasdiffusionselektrode zu erreichen, ist es vorteilhaft, wenn eine Schüttdichte des in der Gasdiffusionselektrode enthaltenen Silbers in einem Bereich von etwa 1,0 · 10³ kg/m³ bis etwa 2,6 · 10³ kg/m³ liegt. Insbesondere ist es vorteilhaft, wenn die Schüttdichte in einem Bereich von etwa 1,4 · 10³ kg/m³ bis etwa 2,2 · 10³ kg/m³ liegt.

Günstig ist es zudem, wenn ein Oberflächen-zu-Volumen-Verhältnis des in der Gasdiffusionselektrode enthaltenen Silbers in einem Bereich von etwa 0,2 · 10³ m²/m³ bis etwa 0,7 · 10³ m²/m³ liegt. Insbesondere ist es vorteilhaft, wenn das Oberflächen-zu-Volumen-Verhältnis in einem Bereich von etwa 0,3 · 10³ m²/m³ bis etwa 0,6 · 10³ m²/m³ liegt. So kann insbesondere eine für die Funktion der Gasdiffusionselektrode optimierte aktive Oberfläche des Silbers sichergestellt werden.

Günstigerweise weist die Gasdiffusionselektrode eine Dicke in einem Bereich von etwa 350 µm bis etwa 700 µm auf. Vorzugsweise liegt die Dicke in einem Bereich von etwa 460 µm bis etwa 470 µm. Insbesondere im letztgenannten Dickenbereich weist die Gasdiffusionselektrode optimale Eigenschaften sowohl hinsichtlich der Aktivität bei der Sauerstoffreduktion als auch bei der Sauerstoffentwicklung auf.

Um die Langzeitstabilität der Gasdiffusionselektrode zu verbessern, ist es vorteilhaft, wenn sie kohlenstofffrei ist. Mit anderen Worten kann zur Ausbildung der Gasdiffusionselektrode vollständig auf die Verwendung von Kohlenstoff verzichtet werden.

Gemäß einer weiteren bevorzugten Ausführungsform der Erfindung kann vorgesehen sein, dass die Gasdiffusionselektrode ein Substrat umfasst, welches die Mischung aus Silber und dem Metalloxid, insbesondere Cobaltoxid, Rutheniumoxid oder Iridiumoxid, trägt. Das Substrat kann insbesondere die Handhabung der Gasdiffusionselektrode sowie deren Herstellung und mechanische Stabilität verbessern.

Besonders einfach und kostengünstig ausbilden lässt sich das Substrat, wenn es aus einem Metall hergestellt ist. Insbesondere kann das Substrat in Form eines Netzes ausgebildet sein oder durch ein Streckmetall gebildet werden. Das Metallnetz ist günstigerweise aus Edelstahl, Nickel oder Silber hergestellt. Das Streckmetall ist vorzugsweise ebenfalls aus den genannten Materialien hergestellt. Insbesondere lässt sich die Mischung aus Silber und Metalloxid, insbesondere Cobaltoxid, Rutheniumoxid oder Iridiumoxid, mit einem solchen Metallnetz zusammen verpressen, um eine mechanisch stabile Elektrode in Form eines bifunktionellen Katalysators auszubilden.

Die eingangs gestellte Aufgabe wird ferner bei einem Verfahren der eingangs beschriebenen Art erfindungsgemäß dadurch gelöst, dass die Gasdiffusionselektrode durch Mischen von Silber (Ag) und einem Metalloxid hergestellt wird, wobei das Silber und das Metalloxid in Pulverform zusammengemischt werden, und dass als Metalloxid Cobaltoxid (Co₃O₄), Rutheniumoxid (RuO₂) oder Iridiumoxid (IrO₂) verwendet wird.

Die Gasdiffusionselektrode lässt sich so auf einfache Weise herstellen und weist die bereits oben beschriebenen vorteilhaften Eigenschaften auf. Die Herstellung der Gasdiffusionselektrode lässt sich insbesondere dadurch vereinfachen, dass das Silber und das Metalloxid, insbesondere Cobaltoxid oder Iridiumoxid, in Pulverform zusammengemischt werden.

Die mechanische Stabilität der Gasdiffusionselektrode lässt sich weiter verbessern, wenn das Silber und das Metalloxid, insbesondere Cobaltoxid, Rutheniumoxid oder Iridiumoxid, mit einem Bindemittel vermischt werden.

Eine hervorragende Stabilität in der Gasdiffusionselektrode kann insbesondere dadurch erreicht werden, wenn als Bindemittel Polytetrafluorethylen (PTFE), Polypropylen (PP), Polyvinylidenfluorid (PVDF) und/oder Polyethylen (PE) verwendet wird. Die Liste genannter Kunststoffe ist nicht abschließend. Zudem können die Materialien allein oder in beliebiger Kombination miteinander als Bindemittel eingesetzt werden.

Das Mischen der Materialien zur Ausbildung der Gasdiffusionselektrode, insbesondere das Mischen von Silber und Cobaltoxid, optional auch mit einem Bindemittel, wird günstigerweise in einer Messermühle durchgeführt. Insbesondere, wenn ein Bindemittel verwendet wird, entstehen so beim Mischen Fäden aus dem Bindemittel, sogenannte Binder-Fäden, welche die Partikel der Ausgangsmaterialien Silber und Cobaltoxid ähnlich einem Spinnennetz zusammenhalten. Eine Mahldauer zum Mischen in der Messermühle liegt vorzugsweise in einem Bereich von wenigen Sekunden, beispielsweise bei 2 Sekunden.

Ferner ist es günstig, wenn zur Ausbildung der Gasdiffusionselektrode die Bestandteile nach dem Mischen zusammengepresst werden. Insbesondere kann hierfür eine hydraulische Presse oder Walze verwendet werden. Insbesondere ist es denkbar, ein Walzverfahren mit Linienkraft zu verwenden. Durch das Zusammenpressen der gemischten Materialien kann ein stabiler mechanischer Verbund erzeugt werden. Mit einer Walze wird insbesondere ein kontinuierlicher Herstellungsprozess zur Ausbildung von Gasdiffusionselektroden ermöglicht.

Vorzugsweise wird ein Pressdruck beim Zusammenpressen in einem Bereich von etwa 1 bar bis etwa 5 bar genutzt. Vorzugsweise liegt der Pressdruck bei etwa 2,5 bar. So kann ein hinreichend dichter Verbund der eingesetzten Materialien erreicht werden, ohne dass die Porosität der Gasdiffusionselektrode zu gering wird.

Vorteilhaft ist es, wenn eine Presstemperatur beim Zusammenpressen in einem Bereich von etwa 20°C bis etwa 30°C liegt. Insbesondere kann sie bei etwa 25°C liegen. Eine solche Presstemperatur ermöglicht es, die Gasdiffusionselektrode bei Raumtemperatur herzustellen. Dies verringert den Herstellungsaufwand und die damit verbundenen Kosten.

Gemäß einer weiteren bevorzugten Variante des erfindungsgemäßen Verfahrens kann vorgesehen sein, dass zur Ausbildung der Gasdiffusionselektrode die Bestandteile nach dem Mischen und Zusammenpressen getempert werden. Insbesondere dann, wenn die zusammengepresste Mischung ein Bindemittel enthält, kann so ein optimaler mechanischer Verbund der Gasdiffusionselektrode erreicht werden, beispielsweise durch Aufschmelzen des Bindemittels oder mindestens eines Bestandteils desselben und Verkleben der Komponenten Silber und Cobaltoxid mit dem aufgeschmolzenen Bindemittel beziehungsweise des mindestens einen Bestandteils desselben.

Vorteilhaft ist es, wenn das Tempern bei einer Tempertemperatur durchgeführt wird, die höher als eine Bindemittelschmelztemperatur des verwendeten Bindemittels ist. Insbesondere kann vorgesehen sein, dass die Tempertemperatur höher als eine Bindemittelkomponentenschmelztemperatur mindestens einer Bindemittelkomponente eines aus mindestens zwei unterschiedlichen Bindemittelkomponenten gebildeten Bindemittels ist. So kann sichergestellt werden, dass mindestens ein Bestandteil der zusammengepressten Mischung beim Tempern aufschmilzt und die Bestandteile der Gasdiffusionselektrode zusammenbindet, insbesondere durch Verkleben.

Um ein sicheres Verkleben zur Ausbildung eines stabilen mechanischen Verbunds sicherstellen zu können, ist es günstig, wenn beim Tempern das Bindemittel oder mindestens eine Bindemittelkomponente desselben aufgeschmolzen wird.

Vorzugsweise beträgt die Tempertemperatur mindestens etwa 330°C. Vorzugsweise beträgt sie etwa 340°C. Insbesondere, wenn das Bindemittel PTFE ist oder PTFE umfasst, kann bei einer Tempertemperatur von etwa 340°C, die oberhalb des Schmelzpunkts von PTFE liegt, ein sicherer Verbund des gemischten und zusammengepressten, die Gasdiffusionselektrode ausbildenden Materials hergestellt werden.

Günstigerweise wird das Tempern für eine Temperzeit in einem Bereich von etwa 30 Minuten bis etwa 90 Minuten durchgeführt. Vorzugsweise beträgt die Temperzeit etwa 60 Minuten. Wird das gemischte und zusammengepresste Elektrodenmaterial im angegebenen Zeitbereich getempert, kann ein stabiler mechanischer Verbund der gemischten Materialien erreicht werden.

Auf einfache Weise lässt sich die Gasdiffusionselektrode nach dem Tempern nutzen, wenn sie nach dem Tempern abgekühlt wird. Auf besonders einfache Weise kann dies geschehen durch Abkühlen an Umgebungsluft.

Die eingangs gestellte Aufgabe wird ferner bei einer Batterie der eingangs beschriebenen Art erfindungsgemäß dadurch gelöst, dass die positive Elektrode in Form einer der oben beschriebenen Gasdiffusionselektroden ausgebildet ist oder eine solche umfasst.

Mit einer der oben beschriebenen Gasdiffusionselektroden lässt sich eine kostengünstige, leistungsstarke Batterie, insbesondere eine Metall-Luft-Batterie herstellen, die aufgrund der Ausgestaltung der Gasdiffusionselektrode insbesondere eine hohe katalytische Aktivität bei der Sauerstoffreduktion im alkalischen Medium sowie eine hohe Aktivität in der Sauerstoffentwicklung aufweist. Insbesondere lässt sich so eine Batterie mit besonders hoher Kapazität ausbilden.

Um eine besonders gute Funktionalität der Batterie sicherzustellen, ist es vorteilhaft, wenn diese einen alkalischen Elektrolyten umfasst.

Gemäß einer weiteren bevorzugten Ausführungsform der Erfindung kann vorgesehen sein, dass die negative Elektrode ein Metall ist oder umfasst. So kann beispielsweise eine Metall-Luft-Batterie mit hohem Wirkungsgrad ausgebildet werden.

Eine Batterie mit einer besonders hohen Energiedichte lässt sich ausbilden, wenn das Metall Lithium ist oder umfasst.

Die nachfolgende Beschreibung bevorzugter Ausführungsformen der Erfindung dient im Zusammenhang mit den Zeichnungen der näheren Erläuterung. Es zeigen:
- Figur 1:: eine schematische Prinzipskizze einer Metall-Luft-Batterie;
- Figur 2:: eine schematische Schnittansicht durch eine Gasdiffusionselektrode;
- Figur 3:: Zyklovoltammogramme von Gasdiffusionselektroden aus Cobaltoxid/Silber, Iridiumoxid/Silber und reinem Silber;
- Figur 4:: eine schematische Ansicht einer Halbzelle mit einer Drei-Elektroden-Anordnung in einem Elektrolyttank gefüllt mit 1 M LiOH (aq.);
- Figur 5:: Rasterelektronenmikroskopaufnahme einer Gasdiffusionselektrode mit Cobaltoxid, Silber und PTFE;
- Figur 6:: Rasterelektronenmikroskopaufnahme einer Gasdiffusionselektrode mit Iridiumoxid, Silber und PTFE;
- Figur 7:: Zyklovoltammogramme von Gasdiffusionselektroden auf Silberbasis mit unterschiedlichem Cobaltoxid-Anteil;
- Figur 8:: elektrische Widerstände von Gasdiffusionselektroden mit unterschiedlichem Cobaltoxid-Anteil;
- Figur 9:: Zyklovoltammogramme von Gasdiffusionselektroden auf Silberbasis mit unterschiedlichem Iridiumoxid-Anteil;
- Figur 10:: Zyklovoltammogramme von Gasdiffusionselektroden aus reinem Silber, aus Silber mit 20%igem Gewichtsanteil Iridiumoxid und aus Silber mit 20%igem Gewichtsanteil Cobaltoxid;
- Figur 11:: Tafel-Diagramme von Gasdiffusionselektroden aus reinem Silber, aus Silber mit 20%igem Gewichtsanteil Iridiumoxid und aus Silber mit 20%igem Gewichtsanteil Cobaltoxid;
- Figur 12:: Stromdichten von Cobaltoxid/Silber-Gasdiffusionselektroden mit unterschiedlichem Cobaltoxid-Anteil im Vergleich zu einer Elektrode aus reinem Silber;
- Figur 13:: Stromdichten von Iridiumoxid/Silber-Gasdiffusionselektroden mit unterschiedlichem Iridiumoxid-Anteil im Vergleich zu einer Elektrode aus reinem Silber;
- Figur 14:: potentiostatische Diagramme von Silber/Cobaltoxid-Elektroden mit unterschiedlichem Cobaltoxid-Anteil im Vergleich zu einer Elektrode aus reinem Silberbei einem Potential von 0,3 und 1,8 Volt bezogen auf eine reversible Wasserstoffelektrode (RHE);
- Figur 15:: schematische Darstellung eines Ersatzschaltbilds für die kathodische elektrochemische Impedanzspektroskopie (EIS) der Elektroden;
- Figur 16:: schematische Darstellung eines Ersatzschaltbilds für die anodische elektrochemische Impedanzspektroskopie (EIS) der Elektroden;
- Figur 17:: Impedanzspektren von Gasdiffusionselektroden auf Silberbasis mit einem Gewichtsanteil von Cobaltoxid von 20% aufgenommen bei unterschiedlichen kathodischen Potentialen;
- Figur 18:: Impedanzspektren von Gasdiffusionselektroden auf Basis von Silber mit einem Gewichtsanteil von 20% Cobaltoxid aufgenommen bei unterschiedlichen anodischen Potentialen;
- Figur 19:: Widerstandsdiagramme in Abhängigkeit der Stromdichte von Gasdiffusionselektroden auf Basis von reinem Silber sowie auf Basis von Silber mit einem Gewichtsanteil von 20 % Cobaltoxid beziehungsweise 20 % Iridiumoxid, aufgenommen im Sauerstoffreduktionsreaktionsbetriebsmodus;
- Figur 20:: Widerstanddiagramme in Abhängigkeit der Stromdichte von Gasdiffusionselektroden auf Basis von reinem Silber sowie auf Basis von Silber mit einem Gewichtsanteil von 20 % Cobaltoxid beziehungsweise 20 % Iridiumoxid, aufgenommen im Sauerstoffentwicklungsreaktionsbetriebsmodus;
- Figur 21:: Widerstand R₁ (Absorption) von Gasdiffusionselektroden auf Basis von reinem Silber sowie auf Basis von Silber mit einem Gewichtsanteil von 20 % Cobaltoxid beziehungsweise 20 % Iridiumoxid in Abhängigkeit von der Stromdichte;
- Figur 22:: Widerstand R₂ (Ladungstransfer) von Gasdiffusionselektroden auf Basis von reinem Silber sowie auf Basis von Silber mit einem Gewichtsanteil von 20 % Cobaltoxid beziehungsweise 20 % Iridiumoxid in Abhängigkeit der Stromdichte;
- Figur 23:: Widerstand R₃ (poröse Elektrode) von Gasdiffusionselektroden auf Basis von reinem Silber sowie auf Basis von Silber mit einem Gewichtsanteil von 20 % Cobaltoxid beziehungsweise 20 % Iridiumoxid in Abhängigkeit der Stromdichte;
- Figur 24:: Widerstand R₅ (Oxidschicht) von Gasdiffusionselektroden auf Basis von reinem Silber sowie auf Basis von Silber mit einem Gewichtsanteil von 20 % Cobaltoxid beziehungsweise 20 % Iridiumoxid in Abhängigkeit der Stromdichte;
- Figur 25:: Betrag der Stromdichten bei 0,3 Volt und 1,8 Volt bezogen auf die reversible Wasserstoffelektrode (RHE) von Gasdiffusionselektroden aus reinem Silber sowie auf Basis von Silber mit einem Gewichtsanteil von 20 % Cobaltoxid beziehungsweise 20 % Iridiumoxid über 20 Lade- und Entladezyklen;
- Figur 26:: Rasterelektronenmikroskopaufnahme einer Gasdiffusionselektrode aus Silber mit einem Gewichtsanteil von 20 % Cobaltoxid im ursprünglichen Zustand;
- Figur 27:: Rasterelektronenmikroskopaufnahme einer Gasdiffusionselektrode aus Silber mit einem Gewichtsanteil von 20 % Cobaltoxid nach 20 Lade- und Entladezyklen; und
- Figur 28:: Rasterelektronenmikroskopaufnahme einer Gasdiffusionselektrode aus Silber mit einem Gewichtsanteil von 20 % Cobaltoxid nach einem Langzeittest mit 200 Lade- und Entladezyklen.

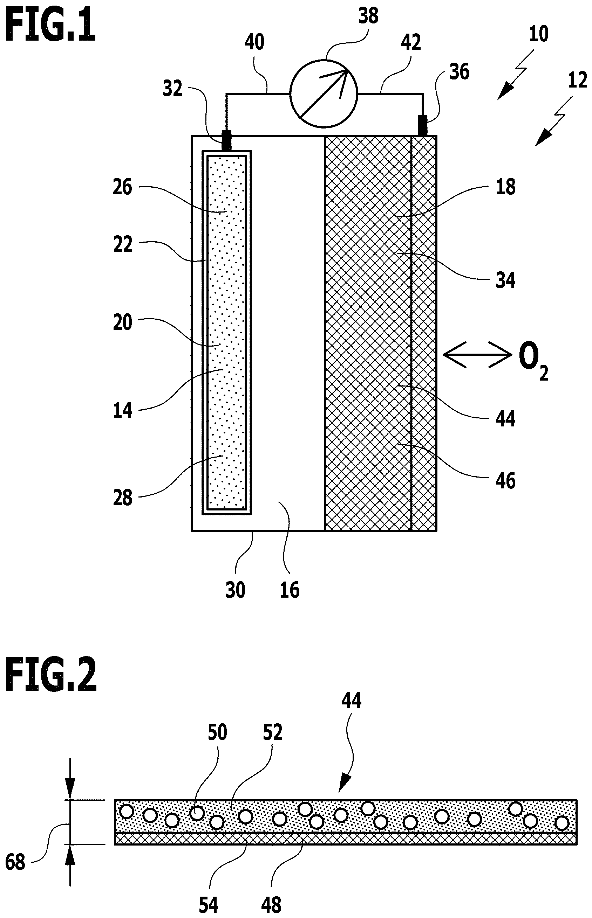

In Figur 1 ist ein Aufbau einer insgesamt mit dem Bezugszeichen 10 bezeichneten Batterie schematisch dargestellt. Die Batterie 10 ist in Form einer Metall-Luft-Batterie 12 ausgebildet. Sie umfasst eine negative Elektrode 14, die mit einem Elektrolyt 16 in Kontakt steht. Mit dem Elektrolyt 16 steht ferner auch eine positive Elektrode 18 der Batterie 10 in Kontakt. Die negative Elektrode 14, die auch als Anode 20 bezeichnet wird, kann optional von einem Separator 22 umgeben sein, welcher in Form einer permeablen Membran ausgebildet sein kann. Insbesondere bei einer Li-Luft-Batterie mit wässrigem alkalischen oder sauren Elektrolyten sollte die Anode vor diesem Elektrolyten geschützt werden durch den flüssigkeitsdichten, ionenleitenden Separator, so dass sich der wässrige Elektrolyt nur auf der Kathodenseite befindet. In diesem Fall wird auf der Anodenseite vorzugweise ein organischer wasserfreier Elektrolyt eingesetzt. Ferner gibt es die Möglichkeit, die Batterie 10 auf beiden Seiten mit einem wasserfreien organischen Elektrolyten auszuführen. Dabei stehen beide Elektroden 14 und 18 mit dem Elektrolyten in Kontakt und ein beschriebener permeabler Separator kann zum Einsatz kommen.

Die Anode 20 besteht vorzugsweise aus einem Metall 26, beispielsweise Lithium 28. Der Separator 22 ist dann vorzugsweise derart ausgebildet, dass er für positive Metall-Ionen, insbesondere Li⁺-Ionen, durchlässig, so dass diese in den Elektrolyt 16 gelangen können.

Beim Elektrolyt kann es sich insbesondere um einen alkalischen Elektrolyt handeln, insbesondere um einen wässrigen alkalischen oder wasserfreien organischen Elektrolyten. Beispielsweise kann eine 1 M LiOH-Lösung verwendet werden.

Optional kann die Batterie 10 ein Gehäuse 30 umfassen, aus dem ein mit der Anode 20 elektrisch leitfähig verbundener Anodenkontakt 32 herausragt. In analoger Weise kann mit der positiven Elektrode 18, die auch als Kathode 34 bezeichnet wird, ein Kathodenkontakt 36 elektrisch leitend verbunden sein, welcher aus dem Gehäuse 30 vorsteht.

Der Anodenkontakt 32 kann über eine Verbindungsleitung 40 mit einem Verbraucher 38 und über eine weitere Verbindungsleitung 42 mit dem Kathodenkontakt 36 verbunden werden, um einen Stromfluss von der Kathode zur Anode zu bewirken. Elektronen fließen dabei von der Anode zur Kathode. Die Batterie 10 wird dabei entladen. Beim Laden der Batterie fließen der Strom und die Elektronen in die jeweils andere Richtung.

Die chemischen Grundgleichungen der Lithium-Luft-Batterie lauten wie folgt:
(1) Kathode: O₂ + 2 H₂O + 4e⁻→ 4OH⁻
(2) Anode: Lithium→ Li⁺ + e⁻
(3) Batterie-Gleichung: 4Li + O₂ + 2H₂O → 4Li⁺ + 4OH⁻

Die Zellenspannung der Lithium-Luft-Batterie 12 beträgt mit einem wässrigen alkalischen Elektrolyt E₀=3,45 V.

Im Falle des Einsatzes eines wasserfreien organischen Elektrolyten lautet die Reaktionsgleichung der Lithium-Luft-Batterie wie folgt:
(4) Batterie-Gleichung: 4Li + O₂ → Li₂O₂

Die Zellenspannung der Lithium-Luft-Batterie 12 beträgt mit einem wasserfreien organischen Elektrolyten E₀=2,96 V.

Die Kathode 34 nimmt an der chemischen Reaktion selbst nicht teil. Sie ist als Gasdiffusionselektrode 44 ausgebildet, und zwar in Form eines bifunktionellen Katalysators 46. Der Katalysator 46 hat im Entlademodus der Batterie 10 die Aufgabe, die Reduktion von Sauerstoff zu fördern, im Ladebetrieb der Batterie 10 Sauerstoff zu entwickeln.

Während des eigentlichen Betriebs der Batterie 10, also beim Entladen, wird Sauerstoff (O₂) an der Kathode gemäß obiger Gleichung (1) reduziert. Gleichzeitig wird Lithium an der Anode oxidiert, so dass Lithium-Ionen (Li⁺) und Elektronen (e⁻) gemäß Gleichung (2) freigesetzt werden.

Gleichung (3) gibt den Gesamtumsatz der Lithium-Luft-Batterie an.

Umgekehrt werden beim Laden der Batterie 10 Li⁺-Ionen durch Aufnahme von Elektronen zu Lithium reduziert, an der Kathode OH⁻-Ionen unter Abgabe von Elektronen zu Sauerstoff (O₂) und Wasser (H₂O) oxidiert.

Der Aufbau der Gasdiffusionselektrode 44 ist schematisch in Figur 2 dargestellt. Auf einem optionalen Substrat 48 ist ein Gemisch aus Silber (Ag) 50 und Cobaltoxid (CO₃O₄) 52 angeordnet. Das Substrat 50 kann in Form gasdurchlässigen Metalls ausgebildet sein, beispielsweise in Form eines Netzes 54 aus Edelstahl.

Zur Herstellung der Elektroden wird Cobaltoxid-Pulver, beispielsweise in einer Reinheit von 95 % bis 99,99 % und einer Korngröße kleiner 50 nm (verfügbar von der Firma Sigma Aldrich) zunächst mit Silber, beispielsweise Silber-Pulver (Ag311, Ferro AG), gemischt. Das eingesetzte Silber-Pulver weist ein Oberflächen-zu-Volumen-Verhältnis im Bereich von etwa 0,3 · 10³ m²/m³ bis etwa 0,6 · 10³ m²/m³ auf. Eine Schüttdichte des Silberpulvers liegt in einem Bereich von etwa 1,4 · 10³ kg/m³ bis etwa 2,2 · 10³ kg/m³. Die Korngrößenverteilung des Silberpulvers ist wie folgt: 84 % des Silberpulvers weisen eine Korngröße im Bereich von 17,0 µm bis 31,0 µm auf, 50 % eine Korngröße im Bereich von 9,0 µm bis 18,0 µm und 16 % eine Korngröße im Bereich von 4,0 µm bis 10,0 µm.

Optional wird die Mischung aus Silber und Cobaltoxid-Pulver mit einem Bindemittel gemischt. Dies kann beispielsweise Polytetrafluorethylen (PTFE), Polypropylen (PP), Polyvinylidenfluorid (PVDF) und/oder Polyethylen (PE) sein oder eine beliebige Mischung aus den genannten Materialien.

Das Mischen der Inhaltsstoffe zur Ausbildung der Kathode 34 erfolgt vorzugsweise in einer Messermühle, um eine homogene Mischung zu erhalten. Beim Mischen entstehen Fäden aus dem Bindemittel, die ähnlich einem Spinnennetz die Mischung zusammenhalten. Eine Mahldauer der Inhaltsstoffe beträgt etwa 2 Sekunden.

Nach dem Mahlen wird die Mischung in einen flexiblen Rahmen gefüllt, mit dem Netz 54 aus Edelstahl bedeckt und zu einem festen Verbund verpresst, vorzugsweise mit einer hydraulischen Presse bei einem Druck von etwa 2,5 bar. Die Temperatur beim Pressen beträgt etwa 25°C. Das Netz aus Edelstahl dient einerseits zur Verbesserung der mechanischen Stabilität der Kathode 34 und andererseits als Stromkollektor.

In der beschriebenen Weise wurden Elektroden mit einer Dicke 68 in einem Bereich von etwa 350 µm bis etwa 700 µm hergestellt. Als besonders gut geeignet für die Funktion der Batterie 10 haben sich Dicken 68 in einem Bereich von etwa 460 µm bis etwa 470 µm erwiesen.

In der nachfolgenden Tabelle ist die Zusammensetzung der zu Versuchszwecken hergestellten und untersuchten Kathoden 34, die Silber und optional Cobaltoxid enthalten, dargestellt.

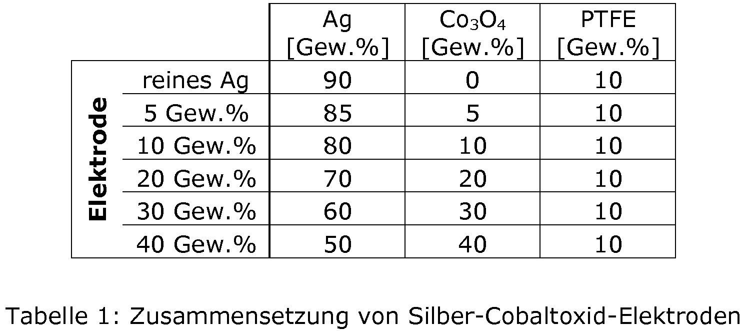

Alle hergestellten und untersuchten Kathoden 34 mit Cobaltoxid enthalten einen Anteil von 10 Gew.% Bindemittel in Form von PTFE. Der Gewichtsanteil von Cobaltoxid variiert von 0 bis 40 %, entsprechend variiert der Gewichtsanteil von Silber zwischen 90 % und 50 %.

In der nachfolgenden Tabelle ist die Zusammensetzung der zu Versuchszwecken hergestellten und untersuchten Kathoden 34, die Silber und Iridiumoxid enthalten, dargestellt.

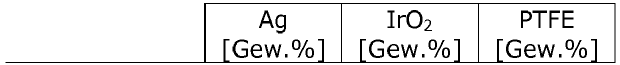

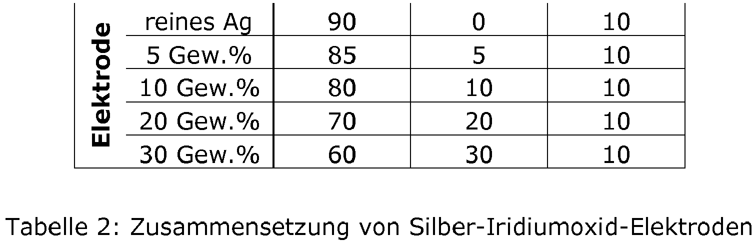

Alle hergestellten und untersuchten Kathoden 34, die Iridiumoxid enthalten, enthalten einen Anteil von 10 Gew.% Bindemittel in Form von PTFE. Der Gewichtsanteil von Iridiumoxid variiert von 0 bis 30 %, entsprechend variiert der Gewichtsanteil von Silber zwischen 90 % und 60 %.

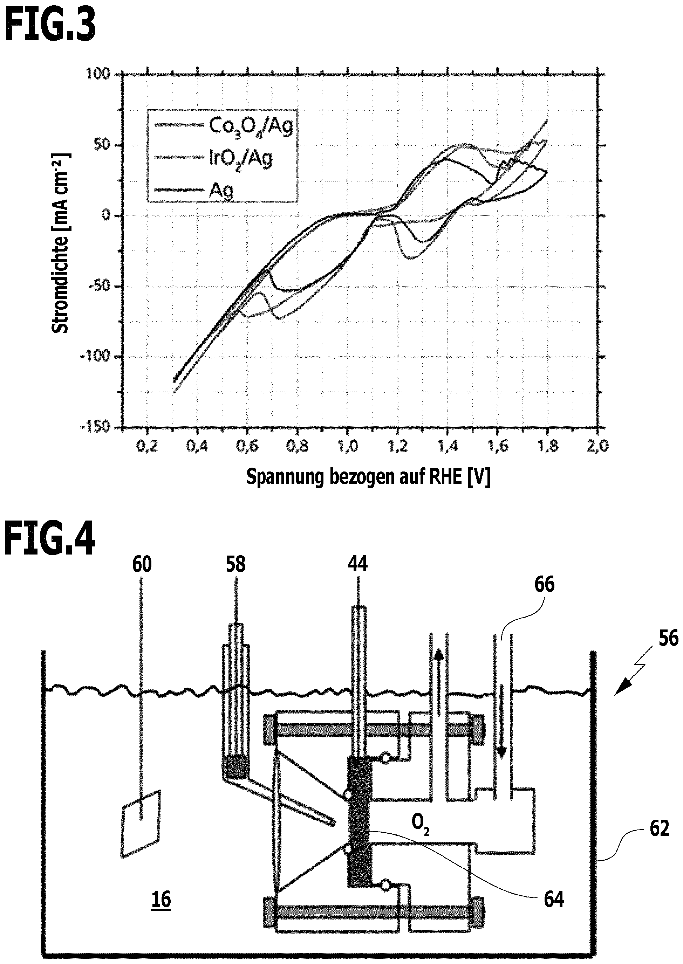

In Figur 3 sind Zyklovoltammogramme von drei verschiedenen Gasdiffusionselektroden 44 dargestellt. Zum einen ist dies eine Kathode aus reinem Silber (Ag), eine Kathode aus einer Mischung von Silber und Iridiumoxid (IrO₂) sowie eine Kathode aus einer Mischung von Silber und Cobaltoxid (Co₃O₄).

Zur elektrochemischen Charakterisierung der verschiedenen Gasdiffusionselektroden 44 wurden elektrochemische Tests in einer Halbzelle 56 mit drei Elektroden durchgeführt, und zwar der Gasdiffusionselektrode 44 einer Referenzelektrode 58 in Form einer reversiblen Wasserstoffelektrode (RHE) sowie einer Platinelektrode 60 als Gegenelektrode. Die Halbzelle 56 umfasst einen Behälter 62, in dem die drei Elektroden 44, 58 und 62 angeordnet sind. Der Behälter 62 ist mit einem Elektrolyt 16 in Form einer 1 M LiOH Lösung gefüllt ist. Das elektrochemische Potential wurde gemessen zwischen der eine Arbeitselektrode bildenden Gasdiffusionselektrode 44 und der Referenzelektrode 58. Der aktive Bereich der Halbzelle betrug 1 cm². Zur Verringerung von Kontaktwiderständen zwischen dem Stromkollektor der Halbzelle und der Arbeitselektrode ist letztere zusätzlich mit einer Schicht aus Sigracet® GDL 35DC zum Gaseinlass hin versehen. Als Testgas wurde trockener reiner Sauerstoff (O₂) 66 in Richtung des Pfeils 70 zum Gaseinlass 64 der Halbzelle hin und in Richtung des Pfeils 72 von diesem wieder weg geleitet.

Der Behälter 62 enthielt für die Messungen 1000 ml Elektrolyt und wurde bei 25°C temperiert. Zyklische Voltammogramme (CV), potentiostatische Diagramme (PC) und elektrochemische Impendanzspektren (EIS) wurden mit einer Zahner IM6 elektrochemischen Workstation durchgeführt. Die Elektroden wurden betrieben mit einer Potentialspannung zwischen 0,3 V und 1,8 V bezogen auf die Referenzelektrode 58 mit einer Vorschubgeschwindigkeit (Slew Rate) von 1 mVs⁻¹. Vor der Durchführung von Impedanzmessungen und potentiostatischen Messungen wurde jede Elektrode 20-mal in beiden Richtungen betrieben. Potentiostatische elektrochemische Impedanzspektren wurden bei offener Zellspannung (OCV) sowie bei OCV ± 100 mV, ± 300mV, ± 500mV und ± 700mV. Der Frequenzbereich für die EIS war 100 mHz bis 100 kHz mit einer Amplitude von 5 mV. Für Langzeitmessungen wurden die Kathoden 34 200 Lade- und Entladezyklen unterworfen mit derselben Vorschubgeschwindigkeit von 1 mVs⁻¹.

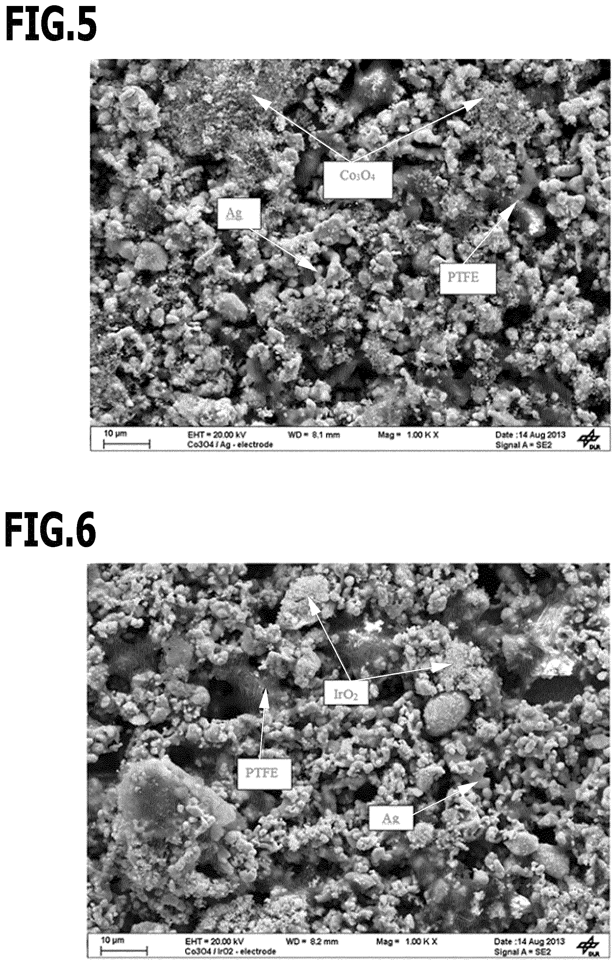

Figur 5 zeigt den mikroskopischen Aufbau einer Gasdiffusionselektrode mit Cobaltoxid. Die Bestandteile Silber, Cobaltoxid und PTFE sind in Figur 5 mit Pfeilen bezeichnet.

Figur 6 zeigt den mikroskopischen Aufbau einer Gasdiffusionselektrode mit Iridiumoxid. Die Bestandteile Silber, Iridiumoxid und PTFE sind in Figur 6 mit Pfeilen bezeichnet.

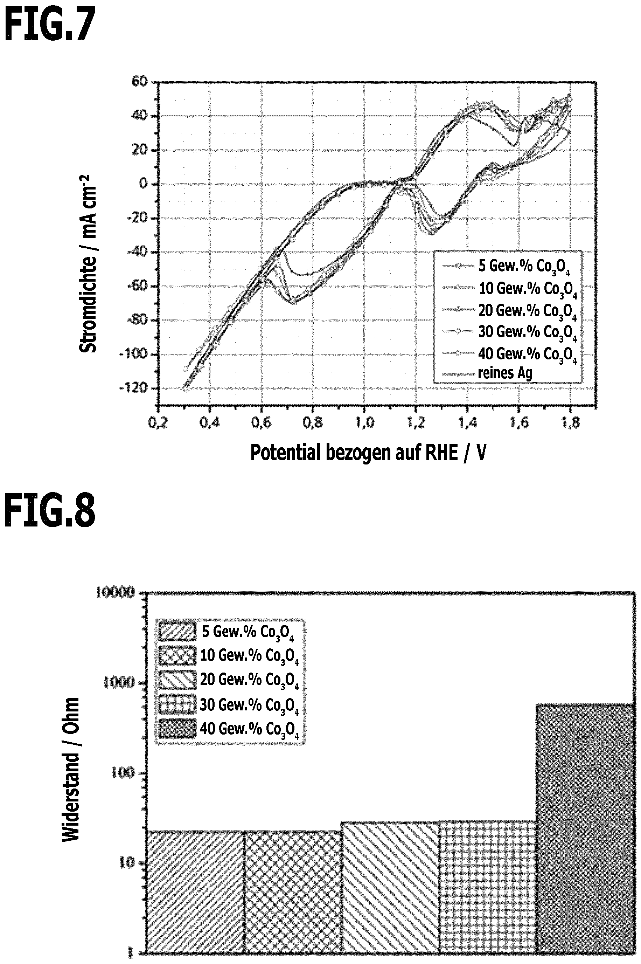

Zyklovoltammogramme, also die Abhängigkeit der Stromdichte in mA/cm² vom Potential bezogen auf die Referenzelektrode 58 in Volt für die sechs in Tabelle 1 zusammengestellten Zusammensetzungen der Gasdiffusionselektroden 44, sind in Figur 7 dargestellt. Mit zunehmendem Cobaltoxidanteil nimmt die Leistung der Kathode 34 zu und erreicht bei einem Anteil von 20 Gewichtsprozent Cobaltoxid und 70 Gewichtsprozent Silber ein Maximum. Die Leistung der Sauerstoffreduktionsreaktion (ORR) wird hauptsächlich bestimmt durch die Aktivität des Silbers und ist nahezu für alle Elektroden konstant. In der Sauerstoffentwicklungsreaktion (OER) nimmt mit zunehmendem Anteil Cobaltoxid die Leistung kontinuierlich zu und erreicht bei einem Gewichtsanteil von 20 % Cobaltoxid ihr Maximum.

Figur 8 zeigt den elektrischen Widerstand von Elektroden mit unterschiedlichem Gehalt an Cobaltoxid. Je höher der Anteil an Cobaltoxid ist, umso höher der elektrische Widerstand der Kathode.

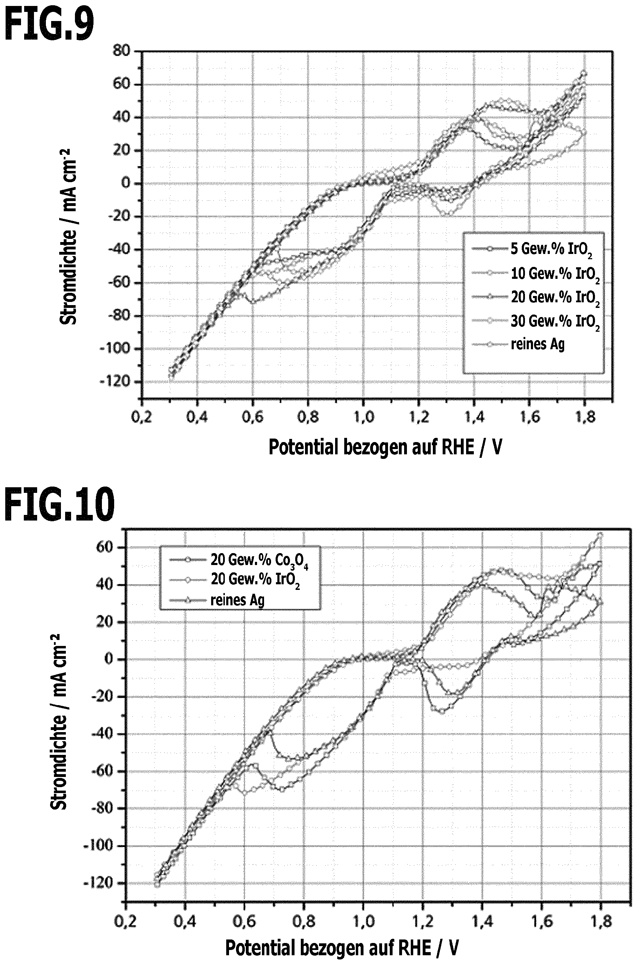

Zyklovoltammogramme, also die Abhängigkeit der Stromdichte in mA/cm² vom Potential bezogen auf die Referenzelektrode 58 in Volt für die fünf in Tabelle 2 zusammengestellten Zusammensetzungen der Gasdiffusionselektroden 44, sind in Figur 9 dargestellt. In dieser Katalysatorkombination dominiert Silber die ORR-Leistung. Wie bei den Cobaltoxid enthaltenden Gasdiffusionselektroden nimmt die OER-Leistung mit zunehmendem Anteil von Iridiumoxid zu, und zwar bis zu einem bestimmten Anteil an Iridiumoxid. Die OER-Leistung bleibt auch bei einem Anteil von 30 Gew.% Iridiumoxid etwa auf dem Wert wie bei einem Anteil von 20 Gew.% Iridiumoxid. In der ORR gibt es keinen Abfall der Stromdichte. Unter Berücksichtigung der Kosten von Iridiumoxid und keiner Steigerung der Stromdichte bei höheren Anteilen an Iridiumoxid in der Mischung erscheint ein Anteil von 20 Gew.% Iridiumoxid als günstig.

In Figur 10 sind im Vergleich Zyklovoltammogramme einer Kathode 34 aus reinem Silber, einer Kathode 34 mit einem Gewichtsanteil von 20 % Iridiumoxid sowie einer Kathode 34 mit einem Gewichtsanteil von 20 % Cobaltoxid dargestellt.

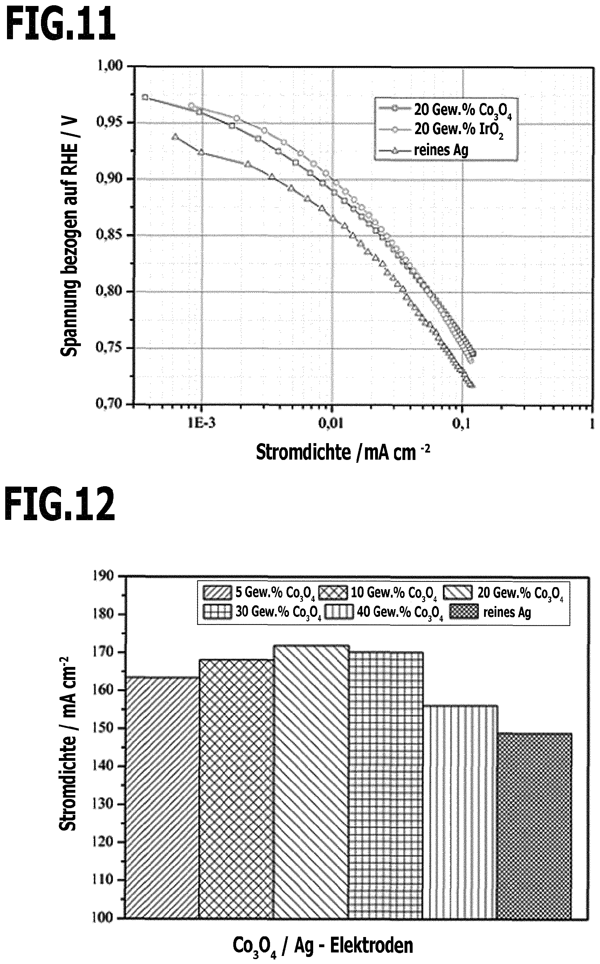

Die drei Kathodenvarianten, deren Zyklovoltammogramme in Figur 10 dargestellt sind, sind mit zugehörigen Tafel-Diagrammen in Figur 11 dargestellt. Es ist zu erkennen, dass die reine Silberelektrode die schlechteste Leistung beziehungsweise Stromdichte zeigt. Die Kathode 34 mit Iridiumoxid zeigt zwar die beste OER-Leistung, sogar besser als Cobaltoxid. Andererseits zeigt die Cobaltoxid enthaltende Kathode 34 eine bessere ORR-Leistung als beide anderen Kathodenvarianten. Die Kombination von Cobaltoxid und Silber verbessert demnach die ORR-Leistung, obwohl das Cobaltoxid eine niedrigere ORR-Leistung aufweist als die reine Silberelektrode.

In Figur 12 sind die Stromdichten der sechs in Tabelle 1 angegebenen Zusammensetzungen von Kathoden 34 aufgetragen. Demnach kann die höchste Stromdichte erreicht werden für die Zusammensetzung, die 20 Gewichtsprozent Cobaltoxid enthält.

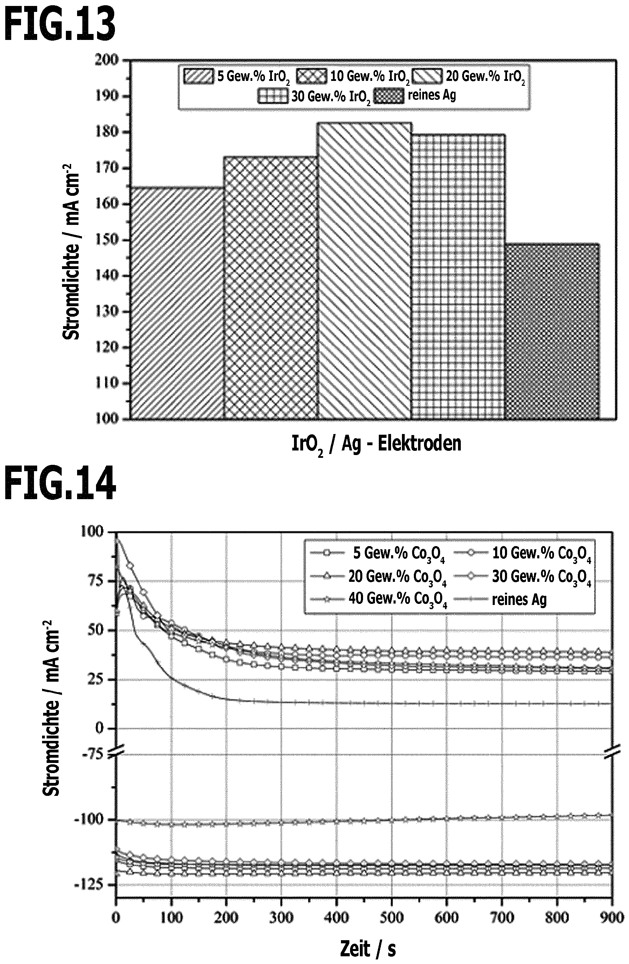

In Figur 13 sind die Stromdichten der fünf in Tabelle 2 angegebenen Zusammensetzungen von Kathoden 34 aufgetragen. Demnach kann die höchste Stromdichte erreicht werden für die Zusammensetzung, die 20 Gewichtsprozent Iridiumoxid enthält.

Die potentiostatischen Verläufe für die sechs in Tabelle 1 angegebenen Zusammensetzungen von Kathoden 34 sind in Figur 14 bei einem Potenzial von 0,3 V beziehungsweise 1, 8 V bezogen auf die reversible Wasserstoffelektrode dargestellt. Nach einem Abfall der Stromdichte in der OER bleibt diese nach etwa 200 Sekunden stabil. Wie bereits in den Zyklovoltammogrammen zu erkennen, weist die 20 Gewichtsprozent Cobaltoxid enthaltende Kathode 34 die höchste Stromdichte in der OER und auch in der ORR auf . Auch hier ist gut zu erkennen, dass die Kathode 34 mit einem Cobaltoxidanteil von 20 Gewichtsprozent eine bessere Leistung zeigt als die Kathode 34 aus reinem Silber.

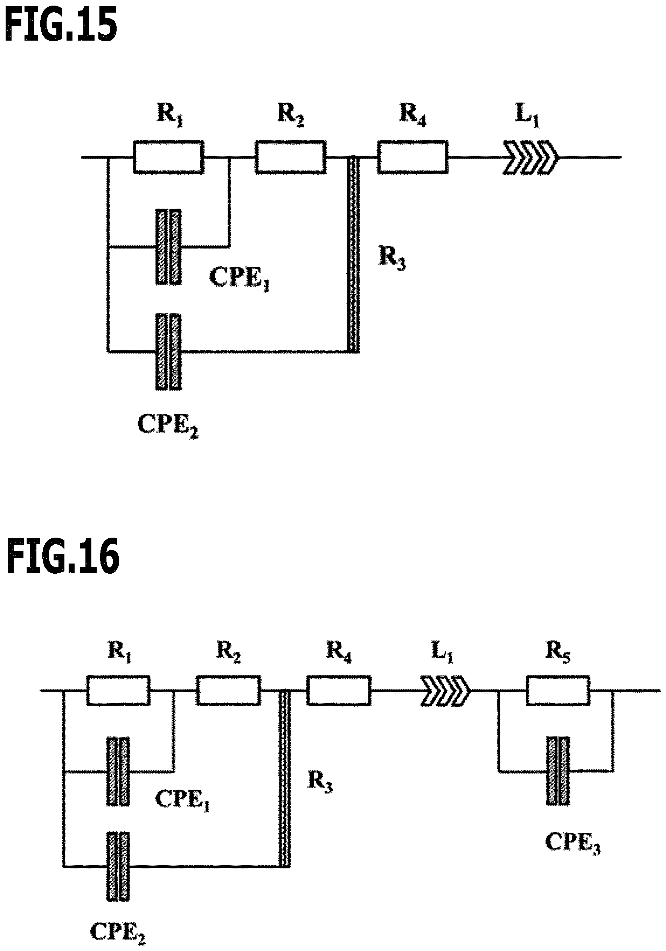

Zur weiteren Charakterisierung der Kathoden wurden elektrochemische Impedanzspektren (EIS) aufgenommen. Zur Anpassung der Impedanzspektren wurden zwei verschiedene Modelle verwendet. Für die ORR wurde das in Figur 15 dargestellte Ersatzschaltbild zur Anpassung der Messpunkte verwendet, für die OER-Betrieb das in Figur 16 dargestellte Ersatzschaltbild.

Der Widerstand R₁ und das Konstantphasenelement CPE₁ bilden die Adsorption von Sauerstoff an der katalytischen Oberfläche der Kathode ab. Der Widerstand R₂ betrifft den Ladungstransfer-Prozess an der Kathodenoberfläche. Das Konstantphasenelement CPE₂ bildet die Doppelschichtkapazität ab. Da eine Gasdiffusionselektrode 44 eine poröse Struktur aufweist, berücksichtigt das Ersatzschaltbild diese Struktur aufgrund der Einflüsse der Struktur auf die Leistung. Dies wird im Ersatzschaltbild durch den Widerstand R₃ abgebildet, der den elektrolytischen Widerstand in der porösen Kathode 34 auf Basis einer homogenen Porensystemwiderstandssimulation darstellt. Der Widerstand R₄ umfasst den ohmschen Widerstand des Elektrolyts 16 und der Kontakte. Die Induktivität L₁ berücksichtigt Induktivitäten insbesondere von Kabel- und Stromkollektoren.

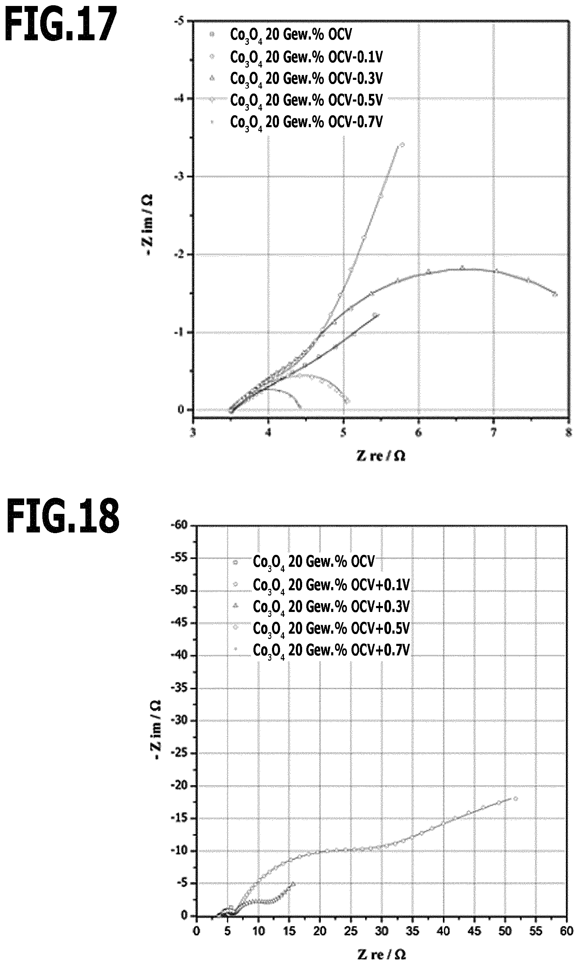

Figur 17 zeigt die Impedanzspektren von Kathoden 34 mit einem Cobaltoxidanteil von 20 %, die bei verschiedenen Kathodenpotenzialen, die in Figur 14 angegeben sind, aufgenommen wurden.

Figur 18 zeigt die Impedanzspektren von Kathoden 34 mit einem Cobaltoxidanteil von 20 %, die bei verschiedenen Anodenpotenzialen, die in Figur 15 angegeben sind, aufgenommen wurden.

Simulationen zeigen eine sehr gute Übereinstimmung mit den gemessenen Eigenschaften für beide, in den Figuren 15 und 16 dargestellten Modelle.

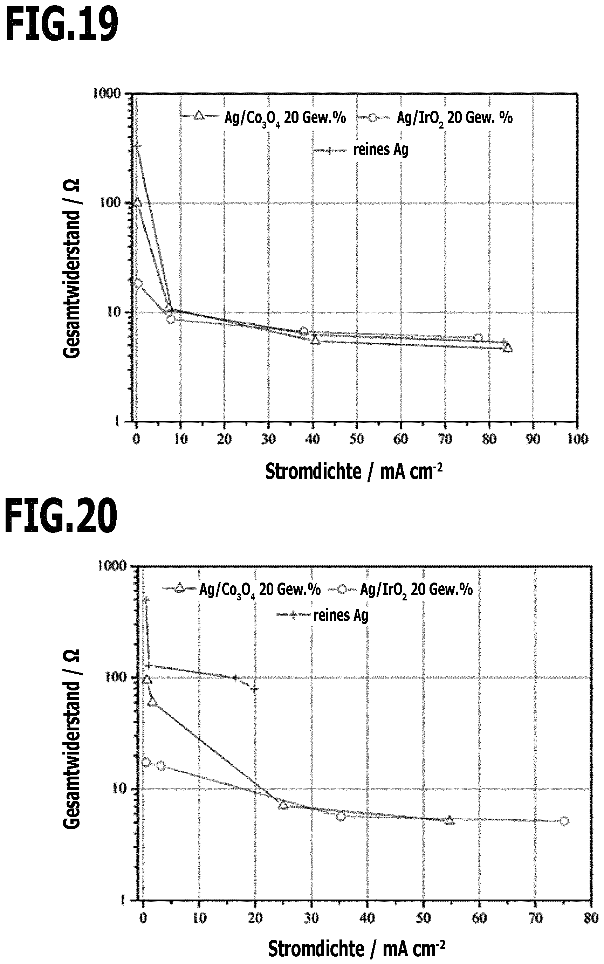

Die Figuren 19 und 20 zeigen den Gesamtwiderstand von Gasdiffusionselektroden 44 auf Basis von reinem Silber sowie auf Basis von Silber mit einem Gewichtsanteil von 20 % Cobaltoxid beziehungsweise 20 % Iridiumoxid, aufgenommen in der OER. Der Gesamtwiderstand hängt im Wesentlichen von den Widerständen R₁, R₂, R₃ und im Fall der OER von R₅ ab. Reines Silber zeigt die geringste Stromdichte und den höchsten Widerstand.

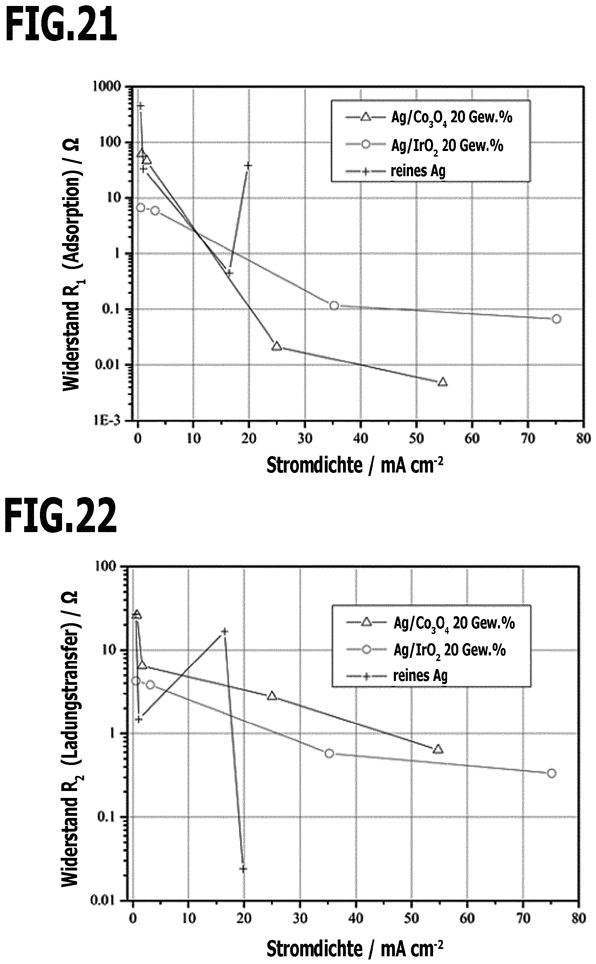

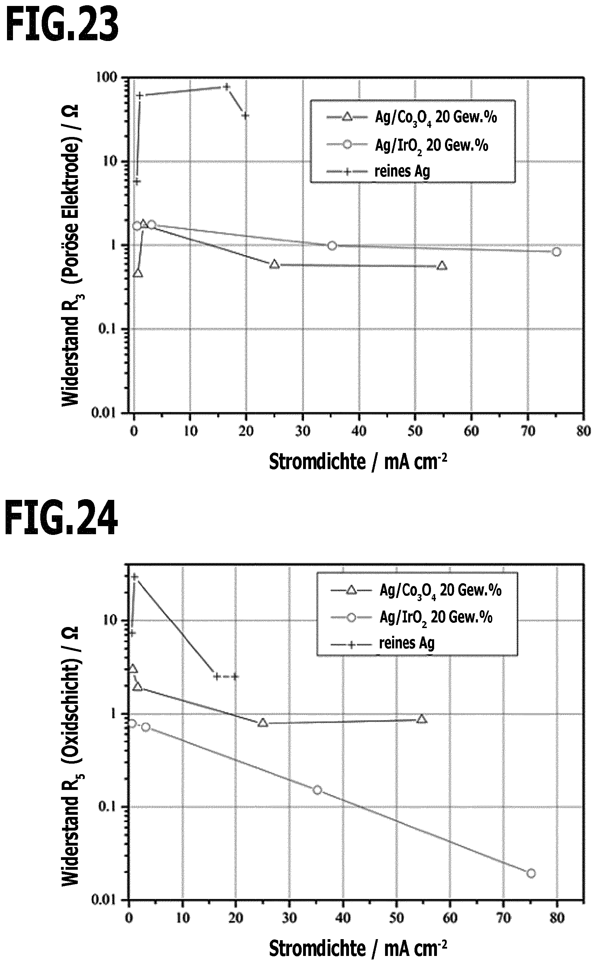

Die Figuren 21 bis 24 zeigen die Messwerte für die Widerstände R₁, R₂, R₃ und R₅ der drei Kathoden 34. Insbesondere der Widerstand R₅, der das Bilden einer Oxidschicht abbildet, zeigt, dass IrO₂ enthaltende Kathoden 34 die geringsten Verluste und daher die höchsten Leistungswerte aufweisen.

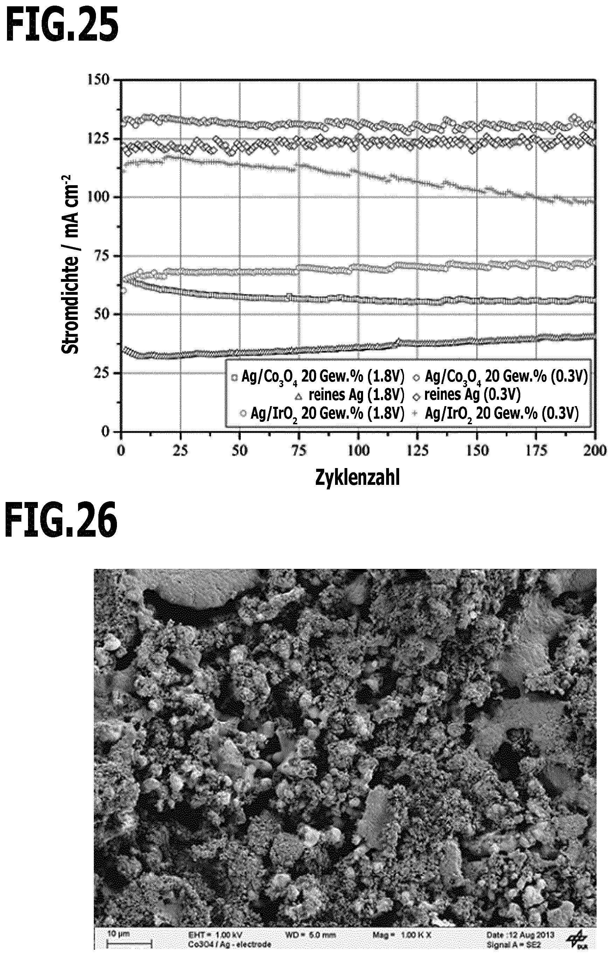

Figur 25 zeigt die Stromdichteentwicklung der gemessenen Kathoden 34 bei den maximalen Potenzialen in der ORR und in der OER, die 0,3 V beziehungsweise 1,8 V bezogen auf die reversible Wasserstoffelektrode betrugen.

Wie in Figur 25 gut zu erkennen, sind alle drei Kathoden 34 über die gemessenen 200 Lade- und Entladezyklen relativ stabil. Wiederum zeigt die Cobaltoxid mit einem Gewichtsanteil von 20 % enthaltende Kathode 34 eine bessere Leistung beziehungsweise höhere Stromdichte als die Kathode 34 aus reinem Silber sowohl in der ORR als auch in der OER.

Zur Untersuchung der Lade- und Entladestabilität der Kathoden 34 wurden zudem Langzeittests durchgeführt. Die Kathoden wurden 200 Lade- und Entladezyklen unter denselben Bedingungen unterworfen wie für die zuvor erwähnten Zyklovoltammogramme.

Im Verlauf der ersten 50 Lade- und Entladezyklen zeigen die Cobaltoxid enthaltenden Kathoden 34 eine leichte Degeneration, bleiben danach aber im Wesentlichen stabil. Unter Berücksichtigung der Eigenschaften der Kathode 34 aus reinem Silber sowie der in den Figuren 26 bis 28 dargestellten Rasterelektronenmikroskopaufnahmen der Kathode 34 mit einem Gewichtsanteil von 20 % Cobaltoxid im ursprünglichen Zustand, nach 20 Lade- und Entladezyklen sowie nach 200 Lade- und Entladezyklen, könnte die Degeneration auf einen Verlust von aktivem Material, nämlich Cobaltoxid an der Oberfläche, zurückzuführen sein, welches die Leistung in der OER dominiert.

Die Rasterelektronenmikroskopaufnahmen zeigen eine rauere Oberfläche, die darauf hinweist, dass Cobaltoxid-Partikel aufgrund eines zunehmenden Gasdrucks in den Poren der Kathode 34 während der Sauerstoffentwicklung verlorengehen können. Aufgrund dieses Gasdrucks können die kleinen Cobaltoxid-Partikel abgelöst und weggeblasen werden.

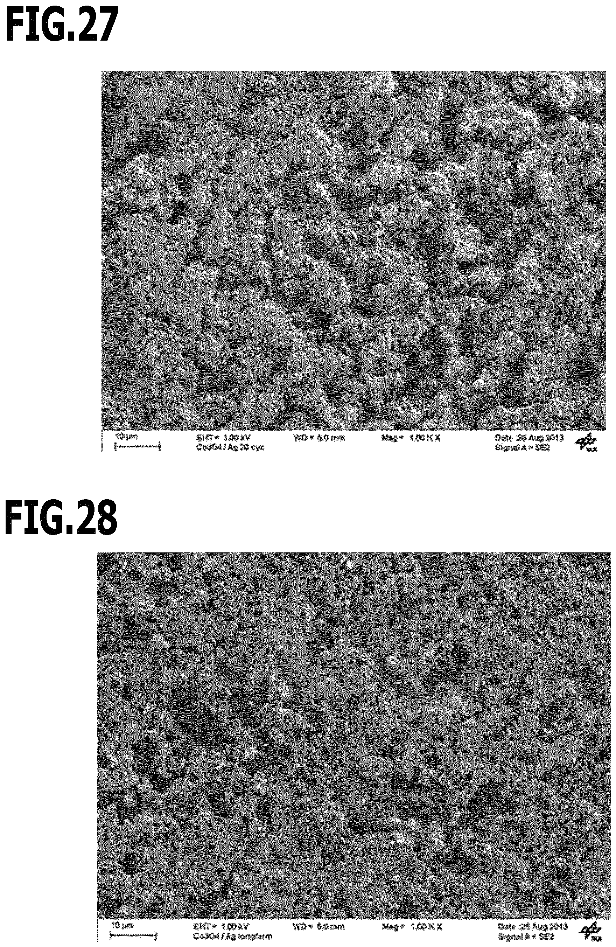

In Figur 27 ist zu erkennen, dass die Silberpartikel im Verlauf der Lade- und Entladezyklen mit Cobaltoxid bedeckt wurden, was der Grund für die zunehmende Leistung in den ersten 20 Lade- und Entladezyklen sein könnte.

Wie oben eingehend dargelegt, zeigen kohlenstofffreie Kathoden 34 zum Einsatz in Lithium-Luft-Batterien, die durch Mischen von Silber mit Metalloxid-Nanopartikeln, insbesondere mit Cobaltoxid-Nanopartikeln und Iridiumoxid-Nanopartikeln, hergestellt wurden, eine verbesserte Leistung in der OER. Besonders gute Leistungswerte für solche Kathoden ergeben sich für einen Gewichtsanteil von Cobaltoxid in der Kathode im Bereich zwischen 10 und 30 Gewichtsprozent. Ein Leistungsmaximum wird etwa bei 20 Gewichtsprozent Cobaltoxid in der Kathode erreicht, die ferner einen Gewichtsanteil von 70 % Silber und 10 % Bindemittel in Form von PTFE enthält.

Die vorgeschlagenen Kathoden 34, welche eine Mischung aus Silber und Cobaltoxid enthalten, zeigen im Vergleich zu Kathoden 34, die eine Mischung aus Silber und Iridiumoxid enthalten, ebenfalls hervorragende Leistungseigenschaften, die zudem die Eigenschaften von Kathoden 34 aus reinem Silber deutlich übertreffen. Sie eignen sich daher hervorragend als Gasdiffusionselektroden in Metall-Luft-Batterien, insbesondere in Lithium-Luft-Batterien. Cobaltoxid enthaltende Elektroden sind zudem im Vergleich zu Iridiumoxid enthaltenden Kathoden 34 deutlich kostengünstiger in Herstellung.

### Bezugszeichenliste

- 10: Batterie
- 12: Metall-Luft-Batterie
- 14: negative Elektrode
- 16: Elektrolyt
- 18: positive Elektrode
- 20: Anode
- 22: Separator
- 24: Membran
- 26: Metall
- 28: Lithium (Li)
- 30: Gehäuse
- 32: Anodenkontakt
- 34: Kathode
- 36: Kathodenkontakt
- 38: Verbraucher
- 40: Verbindungsleitung
- 42: Verbindungsleitung
- 44: Gasdiffusionselektrode
- 46: Katalysator
- 48: Substrat
- 50: Silber (Ag)
- 52: Cobaltoxid (Co₃O₄)
- 54: Netz
- 56: Halbzelle
- 58: Referenzelektrode
- 60: Gegenelektrode
- 62: Behälter
- 64: Gaseinlass
- 66: Sauerstoff
- 68: Dicke
- 70: Pfeil
- 72: Pfeil

## Patentansprüche

1. Gasdiffusionselektrode (44), insbesondere zur Verwendung als Kathode (34) für eine Batterie (10), insbesondere für eine Metall-Luft-Batterie (12), welche ein Gemisch aus Silber (Ag) und einem Metalloxid (52) enthält, **dadurch gekennzeichnet, dass** das Silber (50) und das Metalloxid (52) in Pulverform zusammengemischt sind und dass das Metalloxid Cobaltoxid in der Form Co₃O₄ oder Iridiumoxid in der Form IrO₂ ist oder enthält.

2. Gasdiffusionselektrode nach Anspruch 1, **dadurch gekennzeichnet, dass** sie aus einem Gemisch aus Silber (Ag) (50) und dem Metalloxid (52) besteht.

3. Gasdiffusionselektrode nach Anspruch 1, **dadurch gekennzeichnet, dass** das Gemisch Silber (Ag) (50) mit einem Gewichtsanteil von etwa 70 % und Metalloxid (52) mit einem Gewichtsanteil von etwa 20 % enthält.

4. Gasdiffusionselektrode nach Anspruch 1 oder 3, soweit Anspruch 3 direkt auf Anspruch 1 rückbezogen ist, **dadurch gekennzeichnet, dass** sie ein Bindemittel enthält.

5. Gasdiffusionselektrode nach Anspruch 4, **dadurch gekennzeichnet, dass**
a) ein Gewichtsanteil des Bindemittels etwa 10 % beträgt und/oder
b) das Bindemittel Polytetrafluorethylen (PTFE), Polypropylen (PP), Polyvinylidenfluorid (PVDF) und/oder Polyethylen (PE) enthält.

6. Gasdiffusionselektrode nach einem der voranstehenden Ansprüche, **dadurch gekennzeichnet, dass**
a) eine Metalloxid-Partikelgröße nicht größer als etwa 100 nm ist, insbesondere nicht größer als etwa 50 nm,
und/oder
b) die Gasdiffusionselektrode eine Porosität in einem Bereich von etwa 40 % bis etwa 80 % aufweist,
insbesondere in einem Bereich von etwa 50 % bis etwa 65 %,
und/oder
c) eine Silber-Korngröße des in der Gasdiffusionselektrode (44) enthaltenen Silbers (50) in einem Bereich von etwa 17 µm bis etwa 31 µm liegt,
insbesondere in einem Bereich von etwa 21 µm bis etwa 27 µm,
und/oder
d) ein Anteil in einem Bereich von etwa 75 % bis etwa 95 % des in der Gasdiffusionselektrode (44) enthaltenen Silbers (50) eine Silber-Korngröße in einem Bereich von etwa 17 µm bis etwa 31 µm aufweist,
insbesondere ein Anteil von etwa 84 %,
und/oder
e) ein Anteil in einem Bereich von etwa 40 % bis etwa 60 % des in der Gasdiffusionselektrode (44) enthaltenen Silbers (50) eine Silber-Korngröße in einem Bereich von etwa 9 µm bis etwa 18 µm aufweist,
insbesondere ein Anteil von etwa 50 %,
und/oder
f) ein Anteil in einem Bereich von etwa 10 % bis etwa 22 % des in der Gasdiffusionselektrode (44) enthaltenen Silbers (50) eine Silber-Korngröße in einem Bereich von etwa 4 µm bis etwa 10 µm aufweist,
insbesondere ein Anteil von etwa 16 %,
und/oder
g) eine Schüttdichte des in der Gasdiffusionselektrode (44) enthaltenen Silbers (50) in einem Bereich von etwa 1,0 · 10³ kg/m³ bis etwa 2,6 · 10³ kg/m³ liegt,
insbesondere in einem Bereich von etwa 1,4 · 10³ kg/m³ bis etwa 2,2 · 10³ kg/m³,
und/oder
h) ein Oberflächen-zu-Volumen-Verhältnis des in der Gasdiffusionselektrode (44) enthaltenen Silbers (50) in einem Bereich von etwa 0,2 · 10³ m²/m³ bis etwa 0,7 · 10³ m²/m³ liegt, insbesondere in einem Bereich von etwa 0,3 · 10³ m²/m³ bis etwa 0,6 · 10³ m²/m³.

7. Gasdiffusionselektrode nach einem der voranstehenden Ansprüche, **dadurch gekennzeichnet, dass**
a) die Gasdiffusionselektrode eine Dicke (68) in einem Bereich von etwa 350 µm bis etwa 700 µm aufweist,
insbesondere eine Dicke (68) in einem Bereich von etwa 460 µm bis etwa 470 µm,
und/oder
b) die Gasdiffusionselektrode (44) kohlenstofffrei ist
und/oder
c) die Gasdiffusionselektrode ein Substrat (48) umfasst, welches die Mischung aus Silber (50) und dem Metalloxid trägt,
wobei insbesondere das Substrat (48) aus einem Metall hergestellt ist,
insbesondere ist es in Form eines Metallnetzes (54) ausgebildet oder durch ein Streckmetall gebildet, vorzugsweise aus Edelstahl, Nickel oder Silber.

8. Verfahren zum Herstellen einer Gasdiffusionselektrode (44), insbesondere zur Verwendung als Kathode (34) für eine Batterie (10), insbesondere für eine Metall-Luft-Batterie (12), **dadurch gekennzeichnet, dass** sie durch Mischen von Silber (Ag) (50) und einem Metalloxid (52) hergestellt wird, wobei das Silber (50) und/oder das Metalloxid (52) in Pulverform zusammengemischt werden, und dass als Metalloxid (52) Cobaltoxid (Co₃O₄) oder Iridiumoxid (IrO₂) verwendet wird.

9. Verfahren nach Anspruch 8, **dadurch gekennzeichnet, dass**
a) das Silber (50) und das Metalloxid (52) mit einem Bindemittel vermischt werden,
wobei insbesondere als Bindemittel Polytetrafluorethylen (PTFE), Polypropylen (PP), Polyvinylidenfluorid (PVDF) und/oder Polyethylen (PE) verwendet wird,
und/oder
b) das Mischen in einer Messermühle durchgeführt wird.

10. Verfahren nach Anspruch 8 oder 9, **dadurch gekennzeichnet, dass** zur Ausbildung der Gasdiffusionselektrode (44) die Bestandteile nach dem Mischen zusammengepresst werden, insbesondere mit einer hydraulischen Presse oder Walze.

11. Verfahren nach Anspruch 10, **dadurch gekennzeichnet, dass**
a) ein Pressdruck beim Zusammenpressen in einem Bereich von etwa 1 bar bis etwa 5 bar liegt,
insbesondere etwa 2,5 bar,
und/oder
b) eine Presstemperatur beim Zusammenpressen in einem Bereich von etwa 20°C bis etwa 30°C liegt,
insbesondere 25°C.

12. Verfahren nach Anspruch 10 oder 11, **dadurch gekennzeichnet, dass** zur Ausbildung der Gasdiffusionselektrode (44) die Bestandteile nach dem Mischen und Zusammenpressen getempert werden.

13. Verfahren nach Anspruch 12, **dadurch gekennzeichnet, dass**
a) das Tempern bei einer Tempertemperatur durchgeführt wird, die höher als eine Bindemittelschmelztemperatur des verwendeten Bindemittels ist,
insbesondere höher als eine Bindemittelkomponentenschmelztemperatur mindestens einer Bindemittelkomponente eines aus mindestens zwei unterschiedlichen Bindemittelkomponenten gebildeten Bindemittels,
und/oder
b) beim Tempern das Bindemittel oder mindestens eine Bindemittelkomponente desselben aufgeschmolzen wird,
wobei insbesondere die Tempertemperatur mindestens etwa 330°C beträgt, weiter insbesondere etwa 340°C,
und/oder
c) das Tempern für eine Temperzeit in einem Bereich von etwa 30 Minuten bis etwa 90 Minuten durchgeführt wird,
insbesondere für eine Temperzeit von etwa 60 Minuten,
und/oder
d) die Gasdiffusionselektrode nach dem Tempern abgekühlt wird, insbesondere an Umgebungsluft.

14. Batterie (10), insbesondere eine Metall-Luft-Batterie (12), umfassend eine negative Elektrode (14) mit einem Anodenkontakt (32), eine positive Elektrode (18) mit einem Kathodenkontakt (36) und einen Elektrolyt (16), **dadurch gekennzeichnet, dass** die positive Elektrode (18) in Form einer Gasdiffusionselektrode (44) nach einem der Ansprüche 1 bis 7 ausgebildet ist oder eine solche umfasst.

15. Batterie nach Anspruch 14, **dadurch gekennzeichnet, dass**
a) sie einen alkalischen Elektrolyt (16) umfasst,
oder
b) sie einen organischen Elektrolyt (16) umfasst,
insbesondere einen wasserfreien organischen Elektrolyt (16),
und/oder
c) die negative Elektrode (14) ein Metall ist oder umfasst,
wobei insbesondere das Metall Lithium ist oder umfasst.

## Claims

1. Gas diffusion electrode (44), in particular for use as a cathode (34) for a battery (10), in particular for a metal-air battery (12), which contains a mixture of silver (Ag) and a metal oxide (52), **characterized in that** the silver (50) and the metal oxide (52) are mixed together in powder form, and **in that** the metal oxide is or contains cobalt oxide in the form Co₃O₄ or iridium oxide in the form IrO₂.

2. Gas diffusion electrode in accordance with Claim 1, **characterized in that** it consists of a mixture of silver (Ag) (50) and the metal oxide (52).

3. Gas diffusion electrode in accordance with Claim 1, **characterized in that** the mixture contains silver (Ag) (50) with a proportion by weight of about 70% and metal oxide (52) with a proportion by weight of about 20%.

4. Gas diffusion electrode in accordance with Claim 1 or 3, so far as Claim 3 is directly appendant to Claim 1, **characterized in that** it contains a binder.

5. Gas diffusion electrode in accordance with Claim 4, **characterized in that**
a) a proportion by weight of the binder is about 10%
and/or
b) the binder contains polytetrafluoroethylene (PTFE), polypropylene (PP), polyvinylidene fluoride (PVDF), and/or polyethylene (PE).

6. Gas diffusion electrode in accordance with any one of the preceding Claims, **characterized in that**
a) a metal oxide particle size is not larger than about 100 nm, in particular not larger than about 50 nm,
and/or
b) the gas diffusion electrode has a porosity in a range of about 40% to about 80%,
in particular in a range of about 50% to about 65%,
and/or
c) a silver grain size of the silver (50) contained in the gas diffusion electrode (44) is in a range of about 17 µm to about 31 µm,
in particular in a range of about 21 µm to about 27 µm,
and/or
d) a proportion in a range of about 75% to about 95% of the silver (50) contained in the gas diffusion electrode (44) has a silver grain size in a range of about 17 µm to about 31 µm,
in particular a proportion of about 84%,
and/or
e) a proportion in a range of about 40% to about 60% of the silver (50) contained in the gas diffusion electrode (44) has a silver grain size in a range of about 9 µm to about 18 µm,
in particular a proportion of about 50 %,
and/or
f) a proportion in a range of about 10% to about 22% of the silver (50) contained in the gas diffusion electrode (44) has a silver grain size in a range of about 4 µm to about 10 µm,
in particular a proportion of about 16 %,
and/or
g) a bulk density of the silver (50) contained in the gas diffusion electrode (44) is in a range of about 1.0 · 10³ kg/m³ to about 2.6 · 10³ kg/m³,
in particular in a range of about 1.4 · 10³ kg/m³ to about 2.2 · 10³ kg/m3,
and/or
h) a surface-to-volume ratio of the silver (50) contained in the gas diffusion electrode (44) is in a range of about 0.2 · 10³ m²/m³ to about 0.7 · 10³ m²/m³, in particular in a range of about 0.3 · 10³ m²/m³ to about 0.6 · 10³ m²/m³.

7. Gas diffusion electrode in accordance with any one of the preceding Claims, **characterized in that**
a) the gas diffusion electrode has a thickness (68) in a range of about 350 µm to about 700 µm,
in particular a thickness (68) in a range of about 460 µm to about 470 µm,
and/or
b) the gas diffusion electrode (44) is carbon-free
and/or
c) the gas diffusion electrode comprises a substrate (48) which bears the mixture of silver (50) and the metal oxide,
wherein in particular the substrate (48) is produced from a metal, in particular it is configured in the form of a metal mesh (54) or is formed by an expanded metal, preferably of stainless steel, nickel, or silver.

8. Method for producing a gas diffusion electrode (44), in particular for use as a cathode (34) for a battery (10), in particular for a metal-air battery (12), **characterized in that** it is produced by mixing silver (Ag) (50) and a metal oxide (52), wherein the silver (50) and/or the metal oxide (52) are mixed together in powder form, and **in that** cobalt oxide (Co₃O₄) or iridium oxide (IrO₂) is used as metal oxide (52).

9. Method in accordance with Claim 8, **characterized in that**
a) the silver (50) and the metal oxide (52) are mixed with a binder, wherein in particular polytetrafluoroethylene (PTFE), polypropylene (PP), polyvinylidene fluoride (PVDF), and/or polyethylene (PE) is used as binder,
and/or
b) the mixing is performed in a cutting mill.

10. Method in accordance with Claim 8 or 9, **characterized in that** for forming the gas diffusion electrode (44), the constituents are compressed after mixing, in particular with a hydraulic press or roller.

11. Method in accordance with Claim 10, **characterized in that**
a) a pressing pressure upon compression is in a range of about 1 bar to about 5 bar,
in particular about 2.5 bar,
and/or
b) a pressing temperature upon compression is in a range of about 20°C to about 30°C,
in particular 25°C.

12. Method in accordance with Claim 10 or 11, **characterized in that** for forming the gas diffusion electrode (44), the constituents are tempered after mixing and compression.

13. Method in accordance with Claim 12, **characterized in that**
a) the tempering is performed at a tempering temperature which is higher than a binder melting temperature of the binder used,
in particular higher than a binder component melting temperature of at least one binder component of a binder formed of at least two different binder components.
and/or
b) the binder or at least one binder component thereof is melted upon tempering,
wherein in particular the tempering temperature is at least about 330°C, further particularly about 340°C,
and/or
c) the tempering is performed for a tempering time in a range of about 30 minutes to about 90 minutes,
in particular for a tempering time of about 60 minutes,
and/or
d) after tempering, the gas diffusion electrode is cooled, in particular in ambient air.

14. Battery (10), in particular a metal-air battery (12), comprising a negative electrode (14) with an anode contact (32), a positive electrode (18) with a cathode contact (36), and an electrolyte (16), **characterized in that** the positive electrode (18) is configured in the form of a gas diffusion electrode (44) in accordance with any one of Claims 1 to 7 or comprises such a gas diffusion electrode (44).

15. Battery in accordance with Claim 14, **characterized in that**
a) it comprises an alkaline electrolyte (16),
or
b) it comprises an organic electrolyte (16),
in particular an anhydrous organic electrolyte (16),
and/or
c) the negative electrode (14) is or comprises a metal,
wherein in particular the metal is or comprises lithium.

## Revendications

1. Electrode de diffusion de gaz (44), en particulier destinée à être utilisée en tant que cathode (34) pour une batterie (10), en particulier pour une batterie métal-air (12), laquelle contient un mélange composé d'argent (Ag) et d'un oxyde de métal (52), **caractérisée en ce que** l'argent (50) et l'oxyde de métal (52) sont mélangés ensemble sous une forme pulvérulente, et que l'oxyde de métal est ou contient de l'oxyde de cobalt sous la forme Co₃O₄ ou de l'oxyde d'iridium sous la forme IrO₂.

2. Electrode de diffusion de gaz selon la revendication 1, **caractérisée en ce qu'**elle est constituée d'un mélange composé d'argent (Ag) (50) et de l'oxyde de métal (52).

3. Electrode de diffusion de gaz selon la revendication 1, **caractérisée en ce que** le mélange contient de l'argent (Ag) (50) avec une proportion en poids d'environ 70 % et de l'oxyde de métal (52) avec une proportion en poids d'environ 20 %.

4. Electrode de diffusion de gaz selon la revendication 1 ou 3, ainsi que selon la revendication 3 en lien direct avec la revendication 1, **caractérisée en ce qu'**elle contient un liant.

5. Electrode de diffusion de gaz selon la revendication 4, **caractérisée** en ce
a) une proportion en poids du liant est d'environ 10 %,
et/ou
b) le liant contient du polytétrafluoroéthylène (PTFE), du polypropylène (PP), du polyfluorure de vinylidène (PVDF) et/ou du polyéthylène (PE).

6. Electrode de diffusion de gaz selon l'une quelconque des revendications précédentes, **caractérisée en ce que**
a) une taille de particule d'oxyde de métal n'est pas supérieure à environ 100 nm, en particulier n'est pas supérieure à environ 50 nm,
et/ou
b) l'électrode de diffusion de gaz présente une porosité dans une plage allant d'environ 40 % à environ 80 %,
en particulier dans une plage allant d'environ 50 % à environ 65 %,
et/ou
c) une granulométrie d'argent de l'argent (50) contenu dans l'électrode de diffusion de gaz (44) se situe dans une plage allant d'environ 17 µm à environ 31 µm,
en particulier dans une plage allant d'environ 21 µm à environ 27 µm,
et/ou
d) une fraction dans une plage allant d'environ 75 % à environ 95 % de l'argent (50) contenu dans l'électrode de diffusion de gaz (44) présente une granulométrie d'argent dans une plage allant d'environ 17 µm à environ 31 µm,
en particulier une fraction d'environ 84 %,
et/ou
e) une fraction dans une plage allant d'environ 40 % à environ 60 % de l'argent (50) contenu dans l'électrode de diffusion de gaz (44) présente une granulométrie d'argent dans une plage allant d'environ 9 µm à environ 18 µm,
en particulier une fraction d'environ 50 %,
et/ou
f) une fraction dans une plage allant d'environ 10 % à environ 22 % de l'argent (50) contenu dans l'électrode de diffusion de gaz (44) présente une granulométrie d'argent dans une plage allant d'environ 4 µm à environ 10 µm,
en particulier une fraction d'environ 16 %,
et/ou
g) une masse volumique apparente de l'argent (50) contenu dans l'électrode de diffusion de gaz (44) se situe dans une plage allant d'environ 1,0 · 10³ kg/m³ à environ 2,6 · 10³ kg/m³,
en particulier dans une plage allant d'environ 1,4 · 10³ kg/m³ à environ 2,2 · 10³ kg/m³,
et/ou
h) un rapport surfaces - volume de l'argent (50) contenu dans l'électrode de diffusion de gaz (44) se situe dans une plage allant d'environ 0,2 · 10³ m²/m³ à environ 0,7 · 10³ m²/m³, en particulier dans une plage allant d'environ 0,3 . 10³ m²/m³ à environ 0,6 · 10³ m²/m³.

7. Electrode de diffusion de gaz selon l'une quelconque des revendications précédentes, **caractérisée en ce que**
a) l'électrode de diffusion de gaz présente une épaisseur (68) dans une plage allant d'environ 350 µm à environ 700 µm,
en particulier une épaisseur (68) dans une plage allant d'environ 460 µm à environ 470 µm,
et/ou
b) l'électrode de diffusion de gaz (44) est sans carbone
et/ou
c) l'électrode de diffusion de gaz comprend un substrat (48), lequel supporte le mélange composé d'argent (50) et de l'oxyde de métal,
dans laquelle en particulier le substrat (48) est fabriqué à partir d'un métal,
en particulier est réalisé sous la forme d'un réseau métallique (54)
ou est formé par un métal déployé, de préférence à partir d'un acier inoxydable, de nickel ou d'argent.

8. Procédé servant à fabriquer une électrode de diffusion de gaz (44), en particulier destinée à être utilisée en tant que cathode (34) pour une batterie (10), en particulier pour une batterie métal-air (12), **caractérisé en ce qu'**elle est fabriquée par mélange d'argent (Ag) (50) et d'un oxyde de métal (52), dans lequel l'argent (50) et/ou l'oxyde de métal (52) sont mélangés ensemble sous une forme pulvérulente, et que de l'oxyde de cobalt (Co₃O₄) ou de l'oxyde d'iridium (IrO₂) est utilisé en tant qu'oxyde de métal (52).

9. Procédé selon la revendication 8, **caractérisé en ce que**
a) l'argent (50) et l'oxyde de métal (52) sont mélangés à un liant,
dans lequel en particulier du polytétrafluoroéthylène (PTFE), du polypropylène (PP), du polyfluorure de vinylidène (PVDF) et/ou du polyéthylène (PE) sont utilisés en tant que liant,
et/ou
b) le mélange est effectué dans un broyeur à lame.

10. Procédé selon la revendication 8 ou 9, **caractérisé en ce que** pour réaliser l'électrode de diffusion de gaz (44), les constituants sont comprimés après le mélange, en particulier avec une presse ou un cylindre hydraulique.

11. Procédé selon la revendication 10, **caractérisé en ce que**
a) une pression de pressage lors de la compression se situe dans une plage allant d'environ 1 bar à environ 5 bar,
en particulier d'environ 2,5 bar,
et/ou
b) une température de pressage lors de la compression se situe dans une plage allant d'environ 20 °C à environ 30 °C,
en particulier de 25 °C.

12. Procédé selon la revendication 10 ou 11, **caractérisé en ce que** pour réaliser l'électrode de diffusion de gaz (44), les constituants sont recuits après le mélange et la compression.

13. Procédé selon la revendication 12, **caractérisé en ce que**
a) le recuit est effectué à une température de recuit, qui est supérieure à une température de fusion de liant du liant utilisé,
en particulier supérieure à une température de fusion de composant de liant d'au moins un composant de liant d'un liant formé à partir d'au moins deux composants de liant différents,
et/ou
b) lors du recuit, le liant ou au moins un composant de liant de ce dernier est fondu, dans lequel en particulier la température de recuit est d'environ 330 °C, en outre en particulier d'environ 340 °C,
et/ou
c) le recuit est effectué pendant une durée de recuit dans une plage allant d'environ 30 minutes à environ 90 minutes,
en particulier pendant une durée de recuit d'environ 60 minutes,
et/ou
d) l'électrode de diffusion de gaz est refroidie après le recuit, en particulier au contact de l'air ambiant.

14. Batterie (10), en particulier batterie métal-air (12), comprenant une électrode négative (14) avec un contact d'anode (32), une électrode positive (18) avec un contact de cathode (36) et un électrolyte (16), **caractérisée en ce que** l'électrode positive (18) est réalisée sous la forme d'une électrode de diffusion de gaz (44) selon l'une quelconque des revendications 1 à 7 ou comprend une telle électrode de diffusion de gaz.

15. Batterie selon la revendication 14, **caractérisée en ce que**
a) elle comprend un électrolyte alcalin (16),
ou
b) elle comprend un électrolyte organique (16),
en particulier un électrolyte organique (16) sans eau,
et/ou
c) l'électrode négative (14) est ou comprend un métal,
dans laquelle en particulier le métal est ou comprend du lithium.
